# EUROPEAN PATENT SPECIFICATION

(11) **EP 0 573 863 B1**
(45) Date of publication and mention of the grant of the patent: **26.08.1998**
(21) Application number: 93108690.4
(22) Date of filing: 28.05.1993
(51) Int. Cl.: F16L 37/084, F16L 11/11, F16L 25/00

(54) **Hose connecting structure**
Schlauchverbindung
Raccord de tuyaux souples

(30) Priority: 29.05.1992 JP 164218/92; 30.05.1992 JP 164101/92; 30.05.1992 JP 164102/92; 30.05.1992 JP 164103/92
(43) Date of publication of application: 15.12.1993
(60) Divisional application: 98102730.3
(73) Proprietor: TOKAI RUBBER INDUSTRIES, LTD., Komaki-shi Aichi-ken (JP)
(72) Inventor: Kawasaki, Minoru, c/o TOKAI RUBBER IND., LTD., Komaki-shi, Aichi-ken (JP); Miyajima, Atsuo, c/o TOKAI RUBBER IND., LTD., Komaki-shi, Aichi-ken (JP); Ichikawa, Hiroyuki, c/o TOKAI RUBBER IND., LTD., Komaki-shi, Aichi-ken (JP)
(74) Representative: Pellmann, Hans-Bernd, Dipl.-Ing.

(56) References cited:
- EP-A- 0 002 197
- EP-A- 0 223 495
- EP-A- 0 385 465
- EP-A- 0 435 360
- EP-A- 0 459 812
- EP-A- 0 469 949
- DE-A- 2 642 353
- DE-A- 2 817 099
- DE-A- 2 824 395
- DE-A- 3 615 904
- DE-A- 3 815 168
- DE-B- 1 220 215
- DE-C- 4 037 306
- FR-A- 2 533 996
- GB-A- 1 036 459
- GB-A- 2 153 028
- GB-A- 2 217 419
- GB-A- 2 244 774
- US-A- 3 394 954
- US-A- 3 838 713
- US-A- 4 123 091

## Description

The present invention relates to a hose connecting structure which is suitable for use as a connecting structure when an air duct hose or a filler hose is connected with a mating member.

Concerning an air hose or a filler hose for an automobile, it is recently examined and actually practiced that a resin hose is used instead of a rubber hose. When the resin hose is used as the air hose for the automobile, a negative pressure is applied on the air hose. So, it is better that the resin hose is made of a hard resin material in order to obtain the negative pressure resistance.

Conventionally, the air hose is incorporated into the automobile in the following manner. A mating pipe is inserted into a hose edge opening to connect the hose edge portion and the mating pipe. At that time, a clamp member clamps the hose edge portion and the mating pipe from an outer surface of the hose. This clamping prevents the hose edge portion from falling out. The hose edge portion is adhered to the mating pipe elastically so that the sealing capacity is ensured.

Therefore, in this conventional connecting structure, it is needed that the hose edge portion is closely adhered to the mating pipe. Although, when the hose is made of a hard resin material, the hose edge portion cannot be fully adhered to the mating pipe. Thus, concerning an air hose made of resin, it is considered that the body portion of the hose is made of a hard resin material, and the edge portion of the hose is made of a soft resin material.

This is true of a filler hose or other hoses. For example, in the filler hose, it is considered that the body portion of the hose is made of a hard resin material in order to obtain the oil resistance. It is further considered that the edge portion of the hose is made of a soft resin material.

Since the above resin hose requires the curved portion and the bellows portion, a blow molding method is preferably used to form the hose. In the blow molding method, a tubular or a bladder-like parison is swelled by blowing an air so that the parison is closely adhered to an inner surface of the mold. As a result, the parison is formed in the predetermined shape. Thus, the outer surface of the molded hose is accurately formed in the predetermined shape by the mold, but the inner surface of the molded hose is formed under the free condition. Therefore, the inner surface of the molded hose shows bad characteristics in its shape and dimensional accuracy.

Concerning an air hose, a mating member such as a metal pipe is inserted into a hose edge opening, and a clamp member clamps the mating pipe and a hose edge portion. As a result, the hose edge portion is closely adhered to the mating member so that the sealing capacity is ensured. Therefore, when the hose shows bad characteristics in its shape of the inner surface of the hose edge opening and the dimensional accuracy, i.e. the inner diameter and the thickness shows unevenness, the sealing capacity cannot be achieved satisfactorily.

Concerning the resin hose formed by the blow molding method, the inner surface of the edge portion is polished so that the hose is formed in the predetermined shape and dimension.

When the polishing is performed, a hose forming step becomes complicated, and polishing powders remain at and around the polished portion. Therefore, a washing step is needed, and the hose forming step becomes more complicated. As a result, a forming cost is increased.

The above are problems about the resin hose formed by the blow molding method. When the hose edge portion is made of a soft resin material, the following problems arise.

There are few kinds of soft resin materials for ensuring the excellent sealing capacity. The selection of the soft resin materials is restricted for satisfying other characteristics of the hose.

The filler hose requires the oil resistance and so on. Recently, regulation of oil penetration resistance becomes severe, but the soft resin material cannot meet such demand.

The air hose loaded on a turbo engine car requires heat resistance. In this case, the soft resin material cannot meet such demand.

The air hose or the filler hose for automobiles determines its shape with respect to its attachment space and the mating member.

When the above hoses are formed, the body portion of the hose is formed in the predetermined shape at the molding stage. Furthermore, each edge portion is performed to connect the mating member.

The length and the shape of the hose is different according to the type of the car, the shape and the kind of the mating member, or the attachment space. In this case, each hose must be formed in each different mold according to each different length and shape.

When the above hoses require each different mold, the amount fee for molds is expensive. Especially, when a few variety hoses are formed, the forming cost is high.

A prior art hose connecting structure is known from the DE-A-3 815 168. According thereto a hose and a mating member are connected with each other via a coupling. A ring shaped sealing groove provided at the mating member receives a ring shaped sealing member. The coupling provides a separate sleeve between the hose and the mating member. This separate sleeve is engaged with the hose and the mating member, respectively, via respective engaging portions of the hose and the mating member.

A further hose connecting structure is known from the EP-A-0 002 197, according to which blow-molded hoses are connectable with mating members. Furthermore, a hose connecting structure of a blow-molded hose is known from the GB-A-1 036 459.

It is an object of the present invention to provide an improved hose connecting structure.

This object is achieved by the features of claim 1.

Advantageous further developments are set out in the dependent claims.

Advantageous method steps for providing an improved engaging surface and an improved sealing groove of such a hose connecting structure are subject matter of claims 25 and 26.

At least the intermediate and the engaging portion of the hose connecting structure according to the present invention comprises a thermal flexibility resin which is molded by a blow molding method. The mating member comprises resin, metal and other structure materials. The mating member can be inserted into the end portion opening of the hose or the end portion of the hose can be inserted into the opening of the mating member.

The hose has a ring-shaped sealing member. Usually, the O-ring is used as the sealing member. When the engaging clearance is largely varied, other sealing members such as the cross sectional V-shaped, Y-shaped, W-shaped and X-shaped sealing member can be used. The hose has a sealing groove and the sealing member can be hold to the sealing groove. The sealing groove is a ring-shaped groove which encircles the engaging surface of the end portion of the hose in the circumferential direction. The hose can have one sealing member or more than two sealing member. The sealing member can be hold to the mating member.

The hose has a first engaging portion which is disposed in the axial direction with the predetermined distance to the sealing member. The first engaging portion can be disposed either at the end surface side or at the intermediate side from the viewpoint of the sealing member. The second engaging portion is disposed at the mating member. The first engaging portion and the second engaging portion have the relationship that one can be engaged with or released from the other and vice versa. The structure of these engaging portions can be conventional. For example, the first engaging portion can comprise a lock ring, an engaging claw or one of the pair of engaging structures which is formed by the projection and the recess.

When the first engaging portion is formed as the lock ring, it is preferable that a part of a ring-shaped engaging groove has a wide length so as to enlarge or decrease the diameter of the lock ring for the purpose of releasing the engage of the lock ring. The lock ring is disposed at the opening edge portion of the mating member, and a tapered guide surface whose inner periphery diameter is increased is disposed at an opening side at which an opening is elastically deformed in the shaft center direction by bending it inwardly.

The engaging claw can be an engaging arm comprising an arm portion which projects from the outer periphery surface in the radial direction toward the end side, and an engaging claw which is disposed at the end of the arm portion. A plural of the engaging arms are preferably disposed at the outer periphery surface of the hose in the circumferential direction. These engaging arms are molded by the injection molding method. In this method, the body portion of the hose which has the edge portion and which is molded by the molding method is inserted. The engaging arm which is formed by the injection molding is inserted to be formed integrally. In order to achieve the rigid connection between the engaging arm and the body portion of the hose, the ring-shaped groove is formed at the outer periphery surface of the resin hose, and the base portion of the engaging arm is incorporated into the groove by the insert molding, thereby forming the base portion and the arm portion integrally. In this structure, the engaging arm is rigidly and mechanically engaged with the body portion of the hose, and the both are combined more integrally.

When the mating member has the engaging claw, the first engaging portion of the resin hose can be a ring-shaped projection lug or a groove. The engaging groove is contacted to and engaged with the side surface of the projection lug or the groove. The side surface is preferably reverse-tapered toward the shaft center so that the engaging claw can move ahead. Therefore, the engaging claw is energized in the shaft center direction to be engaged firmly.

It is preferable that the hose has a ring-shaped first contacting surface which faces to the end side and which is disposed at the outer or inner periphery surface of the hose. The first contacting surface is contacted to a ring-shaped second contacting surface which is formed on the engaging surface of the mating member. Since the first contacting surface is contacted to the second contacting surface, the insertion of the hose to the mating member is controlled. The first contacting surface and the second contacting surface can be the edge surface of the hose or the edge surface of the mating member.

The end portion of the hose has a free play prevention portion for preventing free play in a radial direction comprising at least three projection portions which are elastically deformed by the engaging surface of the mating member and which are projected from the engaging surface toward the mating member and which are arranged in the circumferential direction. The free play prevention portion is deformed in the direction which is perpendicular to the axis of said hose so that the hose is elastically contacted to the mating member to be integral. Since there is no free play between the engaging surface of the hose and the mating member, the damage on the engaging surface caused by the vibration collision is prevented. Furthermore, the sealing material improves its sealing capacity.

Two pairs of said free play prevention portions are disposed in the axial direction with the predetermined distance. Therefore, the fluctuation of the hose and the mating member can be prevented, and both are fixed integrally.

The projection can be a projection portion of a semicircular glove, a long projection lug in the axial direction, or a bellows portion which encircles in the circumferential direction and which has a crest and a rill in the axial direction.

The engaging portion of the hose has a backlash prevention portion for preventing backlash in axial direction which makes an elastically compressive-deformation or an elastically elongation-deformation in the axial direction. The backlash caused by the relative movement of the hose and the mating member in the axial direction is prevented by the backlash prevention portion.

The backlash prevention portion can be the bellows portion in which the crest or the rill extends in the circumferential direction. The backlash prevention portion can be a ring-shaped projection lug which extends in the circumferential direction. The projection lug has preferably a wide length so as to enable the large deformation. The backlash prevention portion must be compressed or elongated in the axial direction for the normal operation. In other words, the backlash prevention portion must be pressed to the mating member in the axial direction. The power for inserting the hose into the mating member or the power for drawing out the hose from the mating member is used as the power for pressing the backlash prevention portion. In order to make the elastically compressive-deformation or the elastically elongation-deformation by utilizing the above power, a contacting surface or a hook in which the hose is contacted to the mating member in the axial direction is required.

The hose has preferably both the free play prevention portion and the backlash prevention portion.

As above described, the hose comprises the resin material which is molded by the blow molding method. The end portion is inserted in the inner surface of the mating member by way of the sealing member such as an O-ring.

In the present invention, the end portion of the hose molded by the blow molding method is engaged with the inside of the mating member. In other words, the outer surface of the end portion of the hose in which the dimensional accuracy is excellent is used as the engaging surface of the connecting portion. Furthermore, the sealing of the connecting portion is achieved by the sealing member such as O-ring, not by the elastic adhesion of the end portion of the hose to the mating member.

As a result, after the blow molding of the end portion of the hose, the step of polishing the inner surface of the end portion and the step of washing the polishing powder are omitted. Therefore, the step of forming the hose is simplified.

Since the polishing step is omitted, disadvantages caused by the remain of the polishing powder can be solved.

In the present invention, when the hose is made of the resin material, the end portion of the hose can be made of the soft resin material or the hard resin material. As a result, the selection of the soft resin materials is restricted for satisfying other characteristics of the hose.

In the conventional way, a connection metal fitting is fixed to the end portion of the hose by the calking method for the connection of the hose. Generally, the connection metal fitting is fixed to the mating member.

In the above case, it is required that the metal fitting having a complicated structure is fixed to the end portion of the hose. Therefore, many components are required, and the hose connecting structure becomes complicated. Furthermore, the cost is high.

In the present invention, the engaging portion for the connection and the end portion of the hose are integrally formed. Therefore, the conventional metal fitting is not required, and many components are not required. Furthermore, the cost is low.

Moreover, the end portion made of the resin material is engaged with the mating member. In other words, the end portion is used as a part of the connection coupling, so the connecting structure is simplified.

It is preferable that the first engaging portion of the edge portion of the hose is elastically engaged with the second engaging portion of the mating member. Thus, the connection of the hose can be achieved by one touch.

In the present invention, the engaging portion is disposed at each of the end portion of the hose and the mating member. Since one engaging portion is engaged with the other engaging portion in the axial direction by way of the lock ring which is deformable, the hose cannot be drawn out.

The first engaging portion is disposed at the end side from the sealing groove of the sealing member, and the second engaging portion is disposed at the corresponding portion. In this case, when the end portion of the hose is inserted into the mating member, the sealing member doesn't pass through the second engaging portion. Therefore, the sealing member is not damaged by the connection or contacting between the sealing member and the second engaging portion.

The first engaging portion is disposed at the side to which the sealing member is hold, so the first engaging portion is not contacted to the sealing member. Since the sealing member is not contacted with the second engaging portion, the second engaging portion can be disposed near the sealing member in the direction which is perpendicular to the axis. Therefore, the second engaging portion cannot be projected toward the outside or the inside in the direction which is perpendicular to the axis.

When the hose is molded by the blow molding method, the step such as the polishing of the end portion is not required for increasing the dimension. Therefore, the step of washing the polishing powder can be omitted, and the step of forming the hose is simplified. Since the polishing can be omitted, disadvantages caused by the remain of the polishing powder is solved. Furthermore, the end portion is made of the hard resin material, so the cost for the material is lowered.

As compared with the case in which the outer periphery surface is used as the engaging surface, the same effect is achieved when the inner periphery surface of the end portion of the hose is used as the engaging surface. In this case, the molding accuracy of the blow molding is not enough, so the attention is required for the selection of the sealing member and the prevention of the free play. The sealing member is selected in order to cover the relatively large clearance. Moreover, the free play prevention portion is selected so as to allow the large variation in the direction which is perpendicular to the axis.

When the inner periphery surface is used as the engaging surface, the inner periphery surface is dissolved again and remolded by the blow molding. The sealing groove which holds the sealing member is dissolved again to be remolded.

The long molding body which is used as the material of the hose is cut at the predetermined portion, and the necessary step is performed at the end portion to form the hose as the final product. In this case, the cutting portion of the long molding body is selected, so the desirable length of the hose can be obtained. Therefore, the hoses having a various length can be formed by using only one mold for the hose. Moreover, the cost for the mold is remarkably reduced.

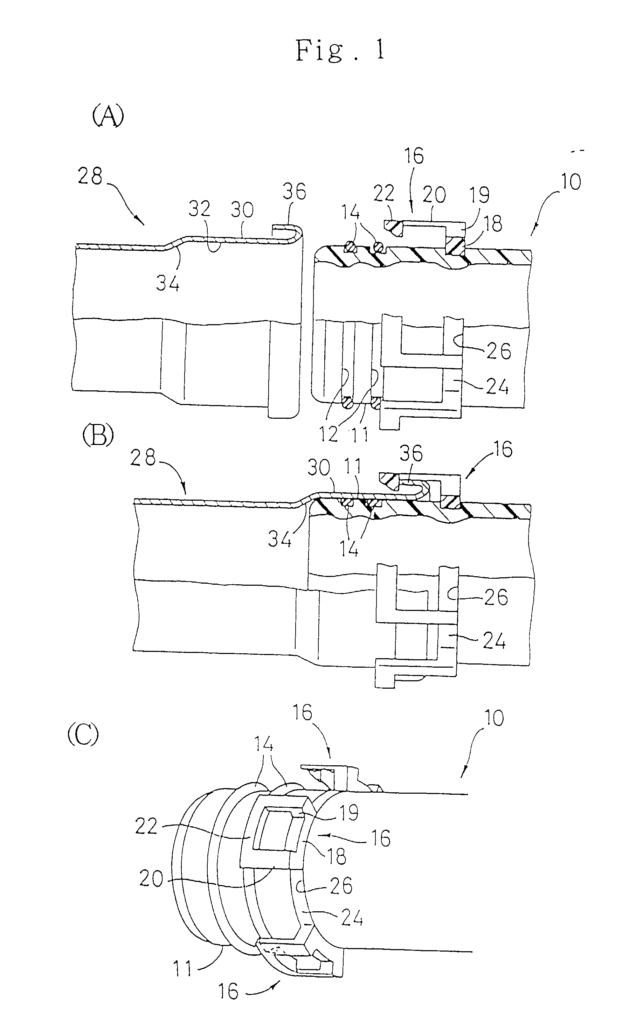

Figures 1 (A) to (C) show the hose connecting structure of the first Embodiment according to the present invention. Figure 1 (A) is a main plan view, partly in cross section, before connecting. Figure 1 (B) is a main plan view, partly in cross section, after connecting. Figure 1 (C) is a perspective view for showing the end portion of the resin hose.

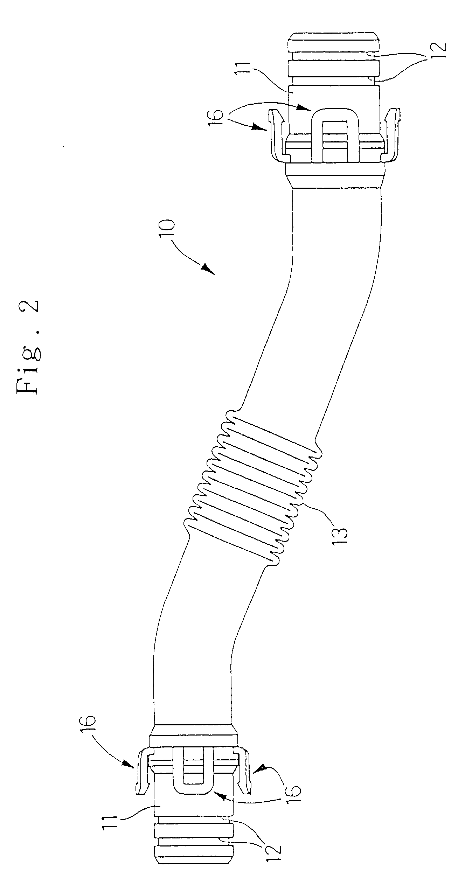

Figure 2 is a plan view for showing the whole structure of the resin hose described in Figure 1.

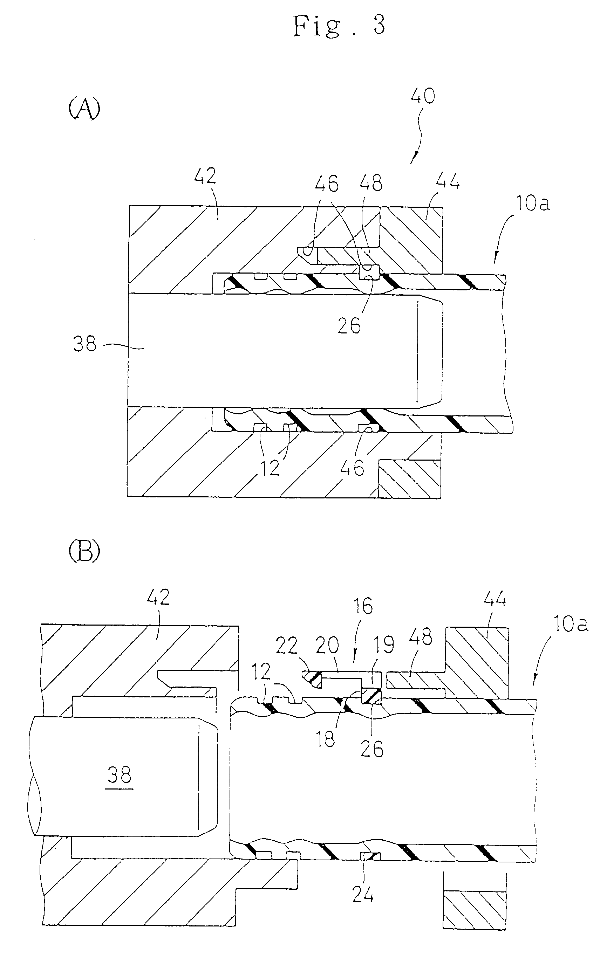

Figures 3 (A) and (B) are explanatory drawings for showing the method for forming the end portion of the resin hose described in Figure 1 (C). Figure 3 (A) is a main cross sectional view for showing the mold when the body portion of the hose is inserted. Figure 3 (B) is a main cross sectional view when the mold is opened.

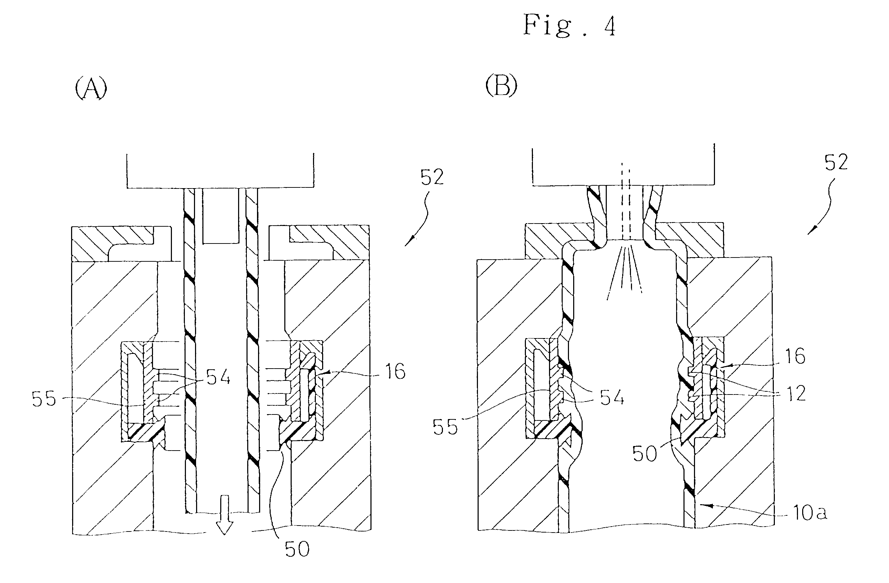

Figures 4 (A) and (B) are explanatory drawings for showing the process of the other method for forming the resin hose of the first Embodiment. Figure 4 (A) is a main cross sectional view before clamping the mold. Figure 4 (B) is a main cross sectional view when the compress gas is introduced.

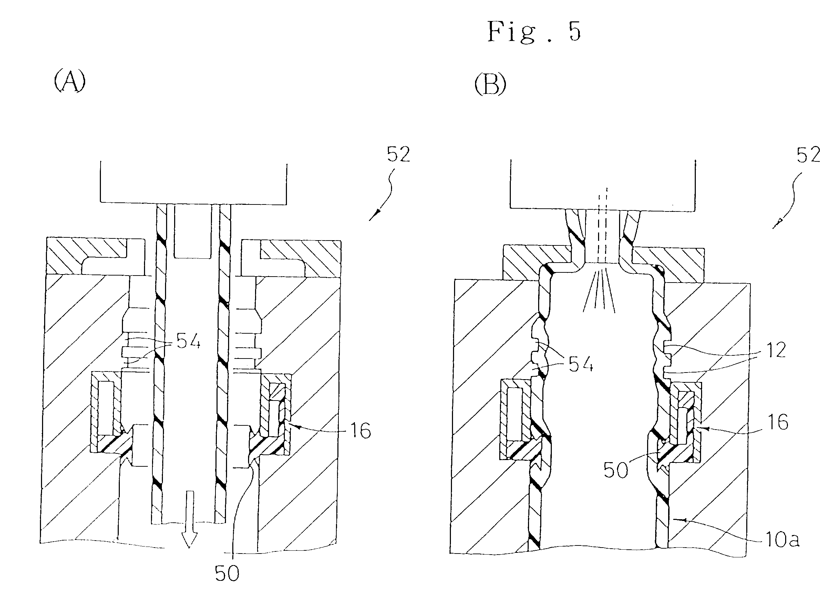

Figures 5 (A) and (B) are explanatory drawings for showing the process of the method for forming the variation of the resin hose of the first Embodiment. Figure 5 (A) is a main cross sectional view before clamping the mold. Figure 5 (B) is a main cross sectional view when the compress gas is inserted.

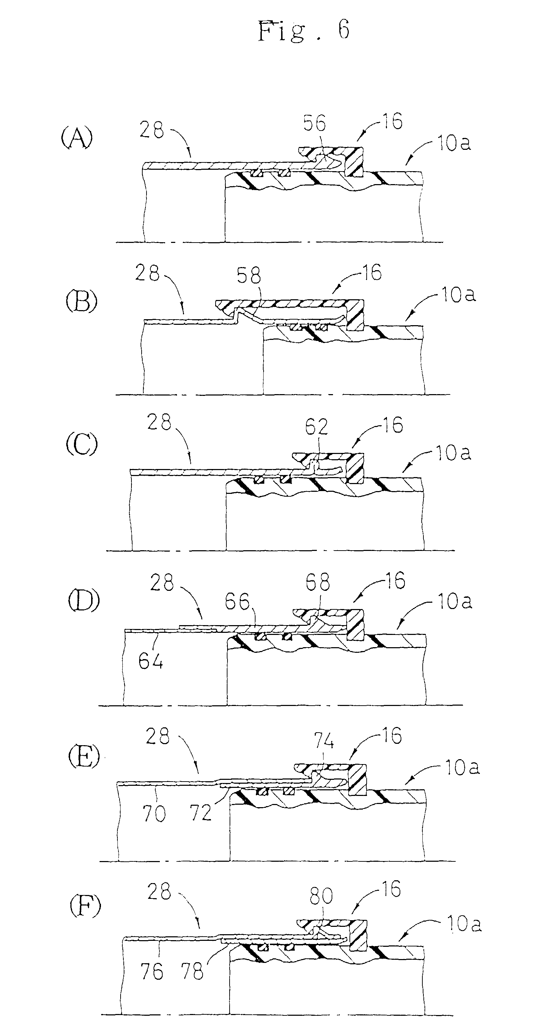

Figures 6 (A) to (F) are drawings for showing other modifications of the hose connecting structure of the first Embodiment. Figure 6 (A) is a main cross sectional view when the other mating member is used. Figure 6 (B) is a main cross sectional view when the other mating member and the other first engaging portion are used. Figure 6 (C) is a main cross sectional view when a further mating member is used. Figure 6 (D) is a main cross sectional view when a further mating member is used. Figure 6 (E) is a main cross sectional view when a further mating member is used. Figure 6 (F) is a main cross sectional view when a further mating member is used.

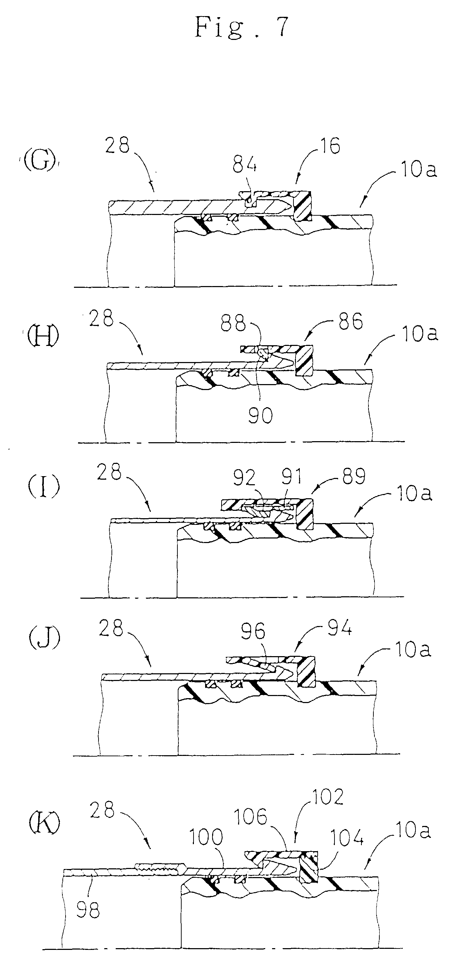

Figures 7 (G) to (K) are drawings for showing further modifications of the hose connecting structure of the first Embodiment. Figure 7 (G) is a main cross sectional view when the other mating member is used. Figure 7 (H) is a main cross sectional view when the other first engaging portion is used. Figure 7 (I) is a main cross sectional view when a further first engaging portion is used. Figure 7 (J) is a main cross sectional view when a further first engaging portion is used. Figure 7 (K) is a main cross sectional view when a further mating member is used.

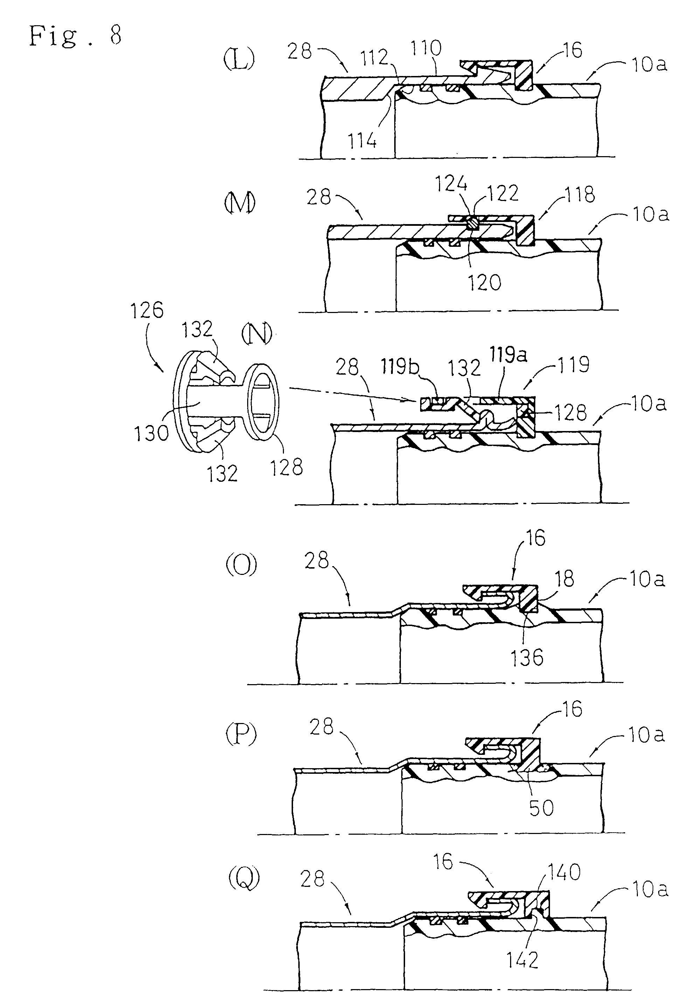

Figures 8 (L) to (Q) are drawings for showing further modifications of the hose connecting structure of the First Embodiment. Figure 8 (L) is a main cross sectional view when the other mating member is used. Figure 8 (M) is a main cross sectional view when the other first engaging portion is used. Figure 8 (N) is a main cross sectional view for showing the connecting structure when a further first engaging portion is used. Figure 8 (0) is a main cross sectional view when a further mating member is used. Figure 8 (P) is a main cross sectional view for showing the internal structure of the first engaging portion. Figure 8 (Q) is a main cross sectional view for showing the internal structure of a further first engaging portion.

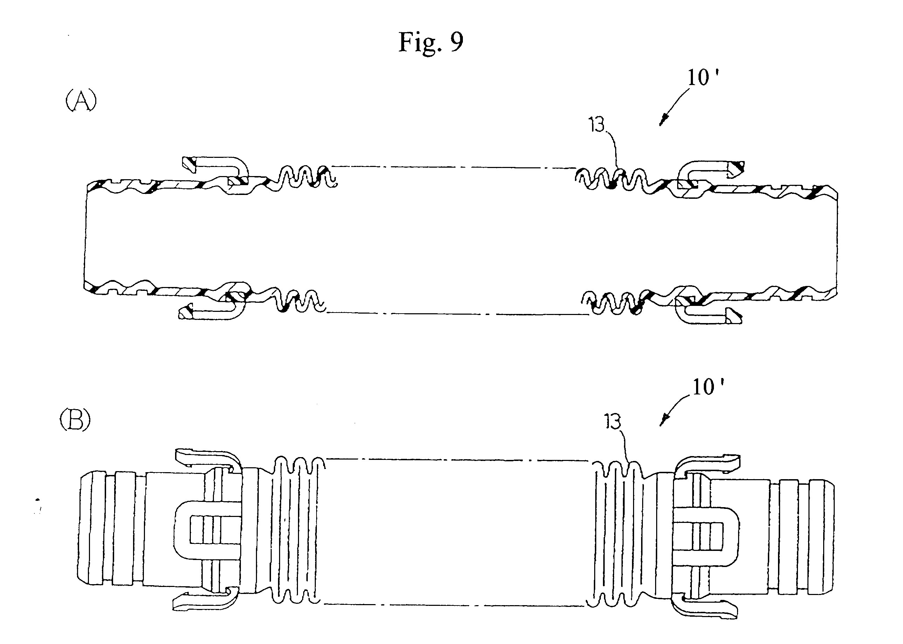

Figures 9 (A) and (B) are drawings for showing the other resin hose which is used for the hose connecting structure of the first Embodiment. Figure 9 (A) is a cross sectional view. Figure 9 (B) is a plan view.

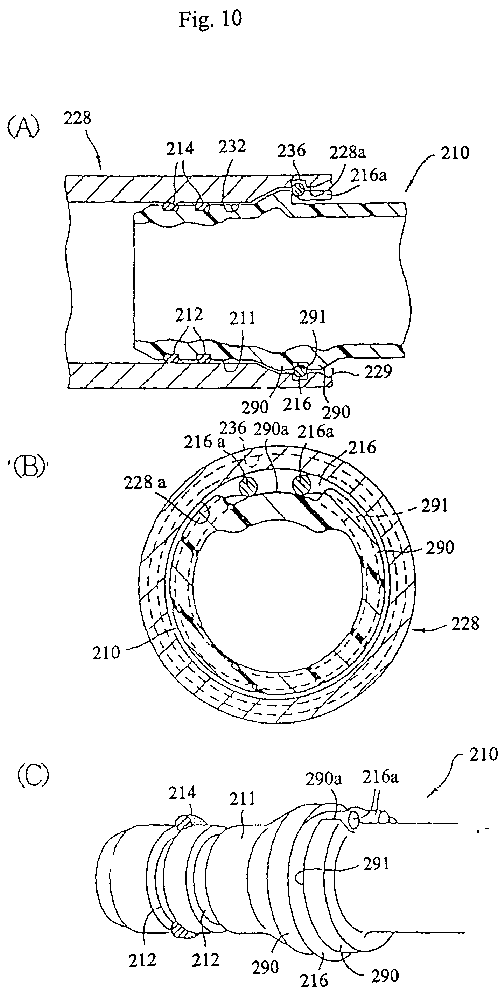

Figures 10 (A) to (C) are drawings for showing the hose connecting structure of the second Embodiment according to the present invention. Figure 10 (A) is a main cross sectional view taken parallel to the axis. Figure 10 (B) is a main cross sectional view taken vertical to the axis. Figure 10 (C) is a perspective view for showing the end portion of the resin hose.

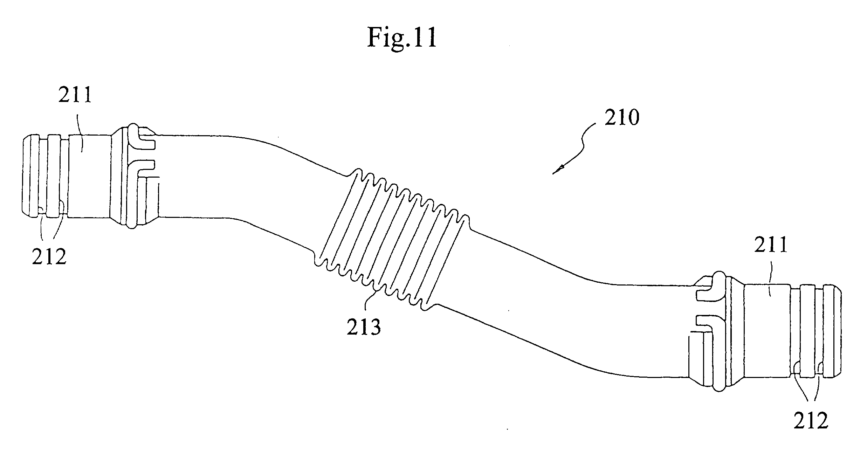

Figure 11 is a plan view for showing the whole structure of the resin hose described in Figure 10.

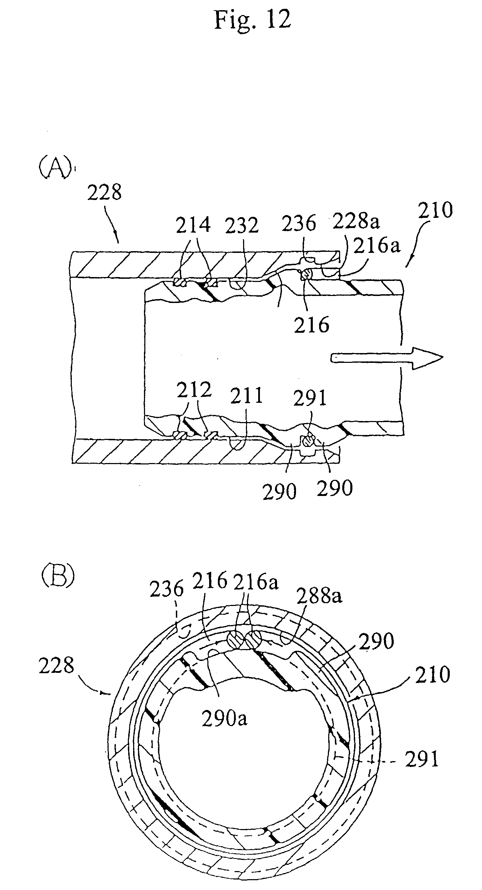

Figures 12 (A) and (B) are explanatory drawings for showing the method for drawing out the hose of the hose connecting structure of the second Embodiment according to the present invention. Figure 12 (A) is a main cross sectional view taken parallel to the axis for showing the releasing condition of the lock ring. Figure 12 (B) is a main cross sectional view taken vertical to the axis.

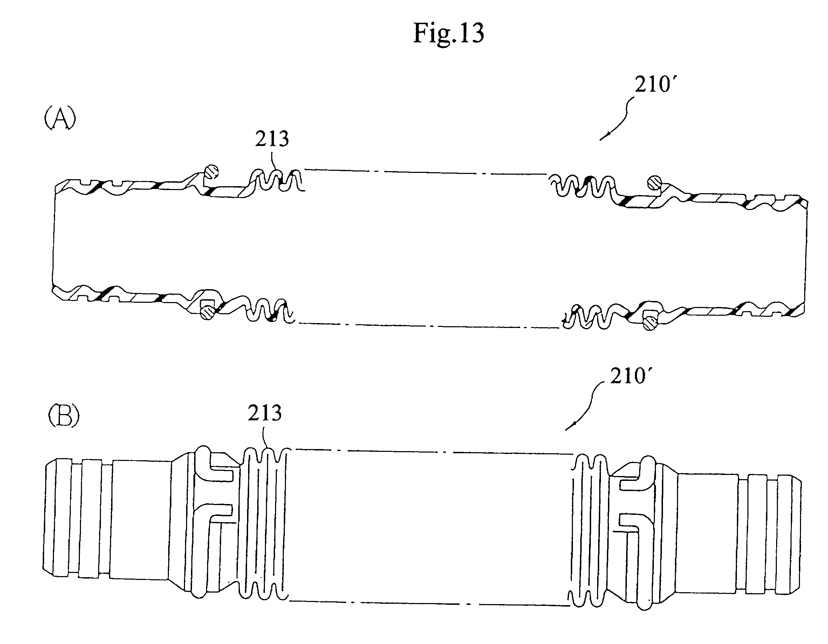

Figures 13 (A) and (B) are drawings for showing the other resin hose which is alternative to the resin of the second Embodiment. Figure 13 (A) is a cross sectional view. Figure 13 (B) is a plan view.

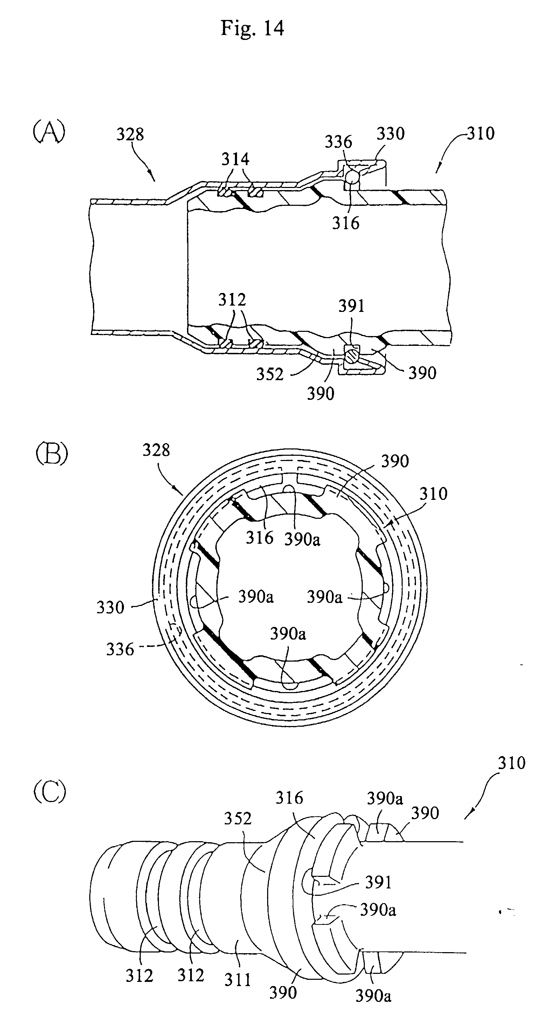

Figures 14 (A) to (C) are drawings for showing the hose connecting structure of the third Embodiment according to the present invention. Figure 14 (A) is a main cross sectional view taken parallel to the axis. Figure 14 (B) is a main cross sectional view taken vertical to the axis. Figure 14 (C) is a perspective view for showing the end portion of the resin hose.

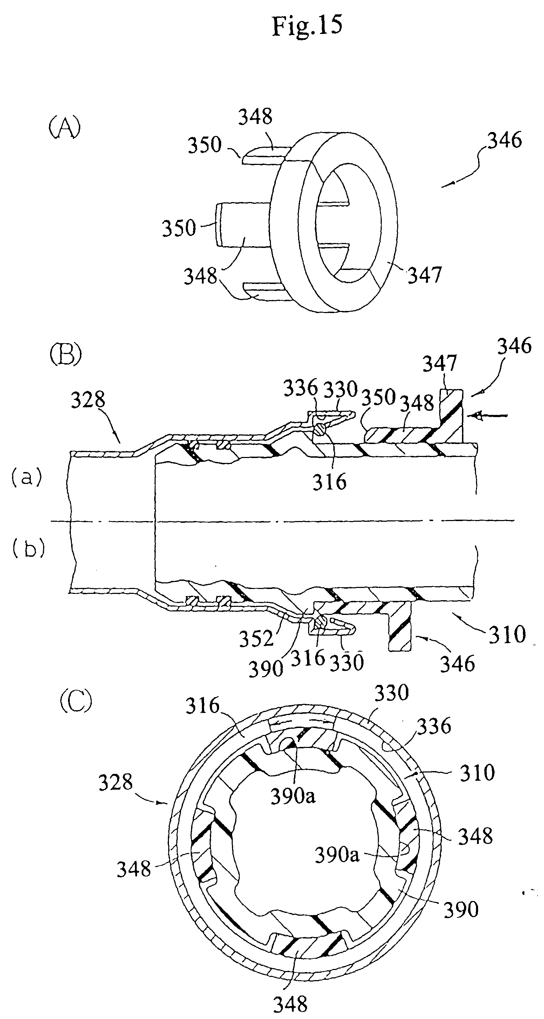

Figures 15 (A) to (C) are drawings for showing the method for drawing out the hose of the hose connecting structure of the third Embodiment according to the present invention. Figure 15 (A) is a perspective view for showing the lock ring releasing apparatus. Figure 15 (B) (a) is a main cross sectional view when the lock ring releasing apparatus is attached to the hose. Figure 15 (B) (b) is a main cross sectional view when the lock ring is released by the lock ring releasing apparatus. Figure 15 (C) is a cross sectional view taken vertical to the axis.

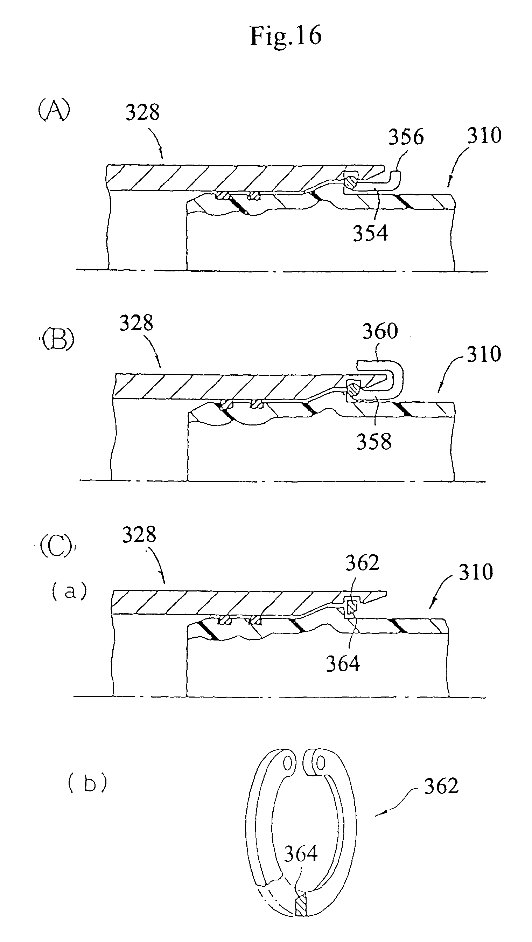

Figures 16 (A) to (C) are drawings for showing three kinds of other representative lock rings which are used for the hose connecting structure of the Third Embodiment. Figure 16 (A) is a main cross sectional view when one lock ring is used. Figure 16 (B) is a main cross sectional view when another lock ring is used. Figure 16 (C) (a) is a main cross sectional view when the other lock ring is used. Figure 16 (C) (b) is a perspective view for showing the other lock ring.

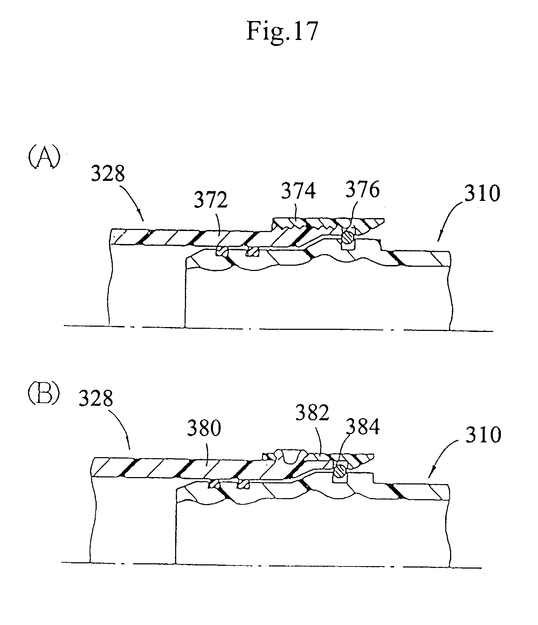

Figures 17 (A) and (B) are drawings for showing two kinds of other representative mating members which are used for the hose connecting structure of the Third Embodiment. Figure 17 (A) is a cross sectional view when one mating member is used. Figure 17 (B) is a cross sectional view when the other mating member is used.

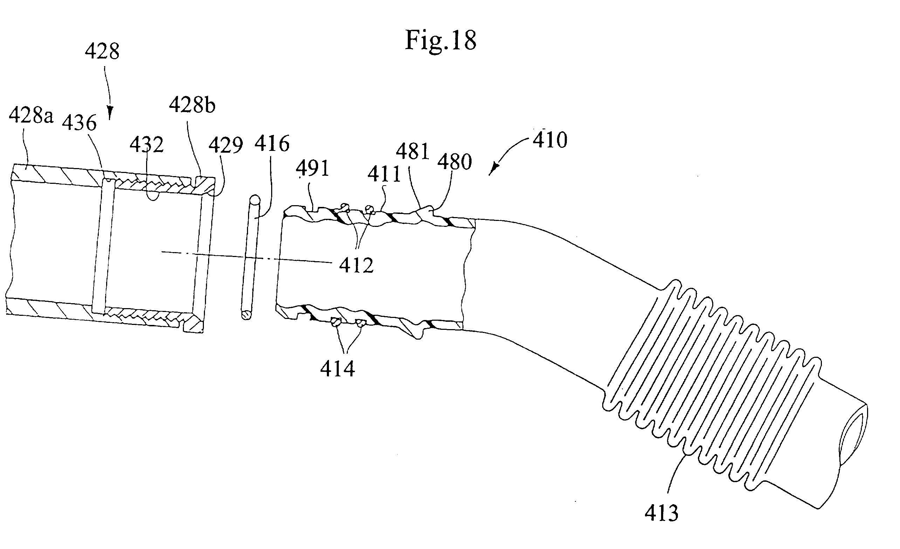

Figure 18 is a drawing for showing the hose connecting structure of the Fourth Embodiment according to the present invention.

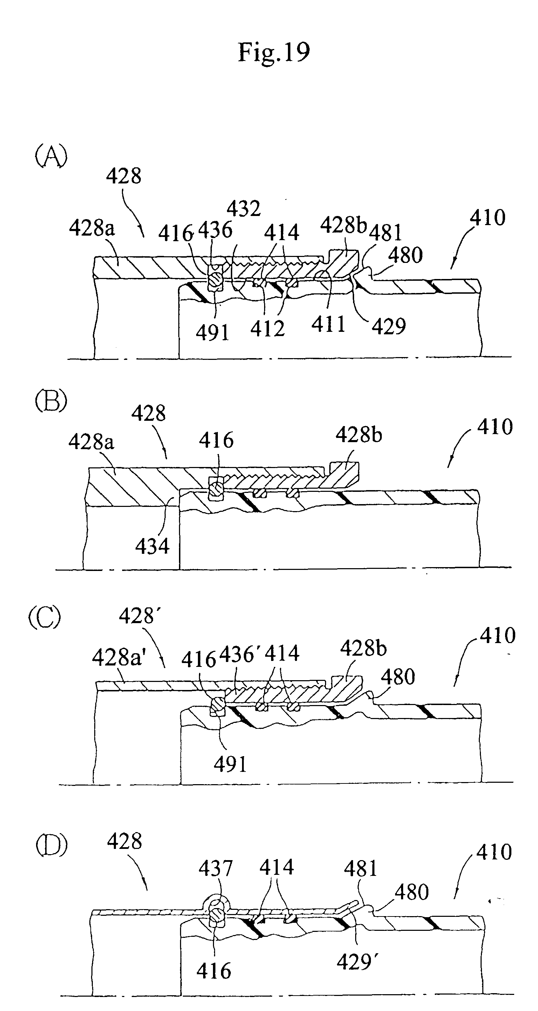

Figures 19 (A) to (D) are drawings for showing other representative hoses and other representative mating members which are used for the hose connecting structure of the Fourth Embodiment. Figure 19 (A) is a main cross sectional view for showing one hose and one mating member. Figure 19 (B) is a main cross sectional view for showing the other hose and the other mating member. Figure 19 (C) is a main cross sectional view for showing a further hose and a further mating member. Figure 19 (D) is a main cross sectional view for showing a further hose and a further mating member.

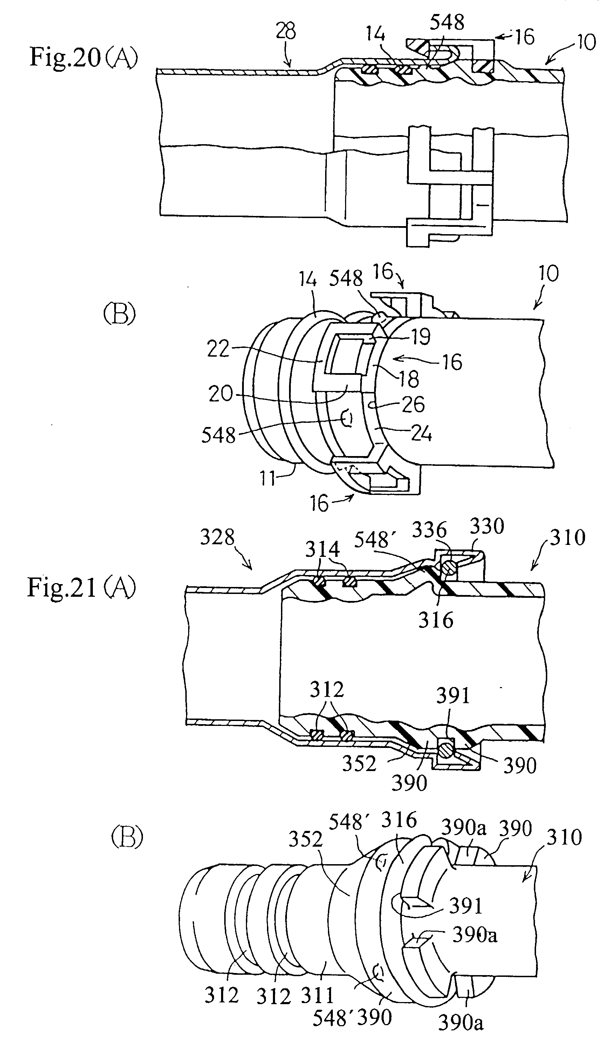

Figures 20 (A) and (B) are drawings for showing the hose connecting structure of the fifth Embodiment according to the present invention. Figure 20 (A) is a main cross sectional view. Figure 20 (B) is a perspective view for showing the end portion of the resin hose.

Figures 21 (A) and (B) are drawings for showing the modifications of the hose connecting structure of the fifth Embodiment. Figure 21 (A) is a main cross sectional view. Figure 21 (B) is a perspective view for showing the end portion of the resin hose.

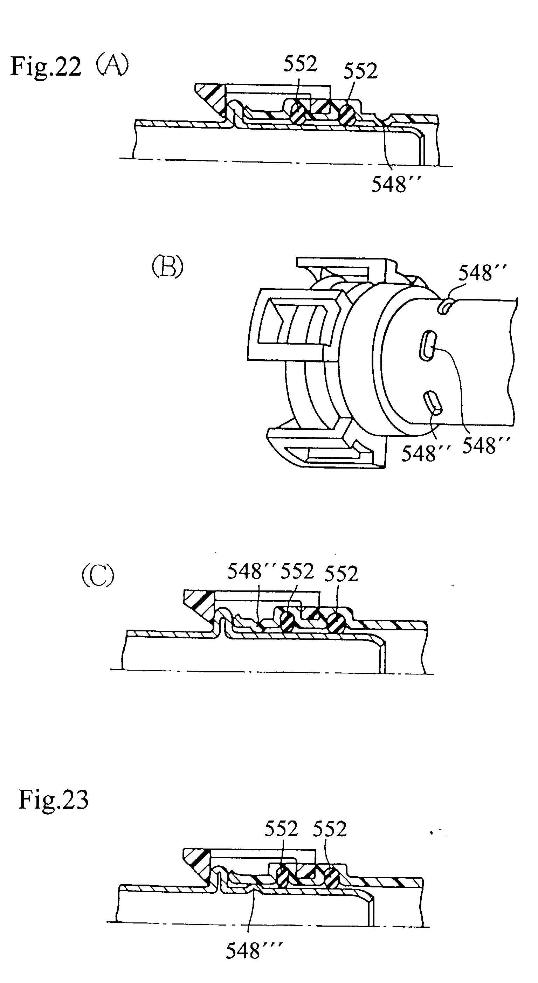

Figures 22 (A) to (C) are drawings for showing further modifications of the hose connecting structure of the fifth Embodiment. Figure 22 (A) is a main cross sectional view. Figure 22 (B) is a perspective view for showing the end portion of the resin hose. Figure 22 (C) is a main cross sectional view for showing the other hose connecting structure.

Figure 23 is a cross sectional view for showing a further modification of the hose connecting structure of the fifth Embodiment.

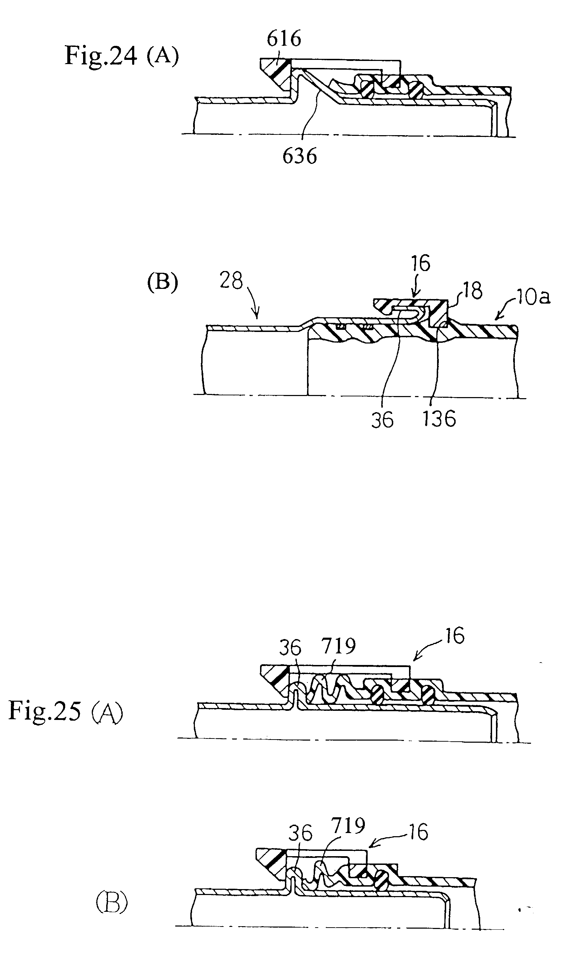

Figures 24 (A) to (C) are drawings for showing three kinds of modifications of the hose connecting structure of the Sixth Embodiment. Figure 24 (A) is a main cross sectional view of one modification. Figure 24 (B) is a main cross sectional view of the other modification.

Figures 25 (A) and (B) are drawings for showing the hose connecting structure of the Seventh Embodiment according to the present invention. Figure 25 (A) is a main cross sectional view. Figure 25 (B) is a main cross sectional view of the modification.

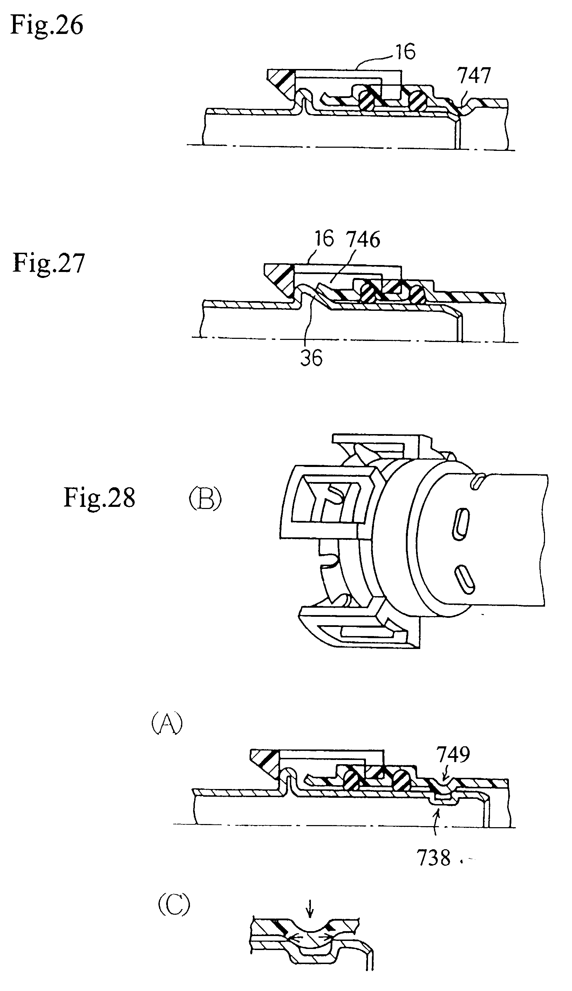

Figure 26 is a drawing for showing the modification of the hose connecting structure of the Seventh Embodiment.

Figure 27 is a drawing for showing further modification of the hose connecting structure of the Seventh Embodiment.

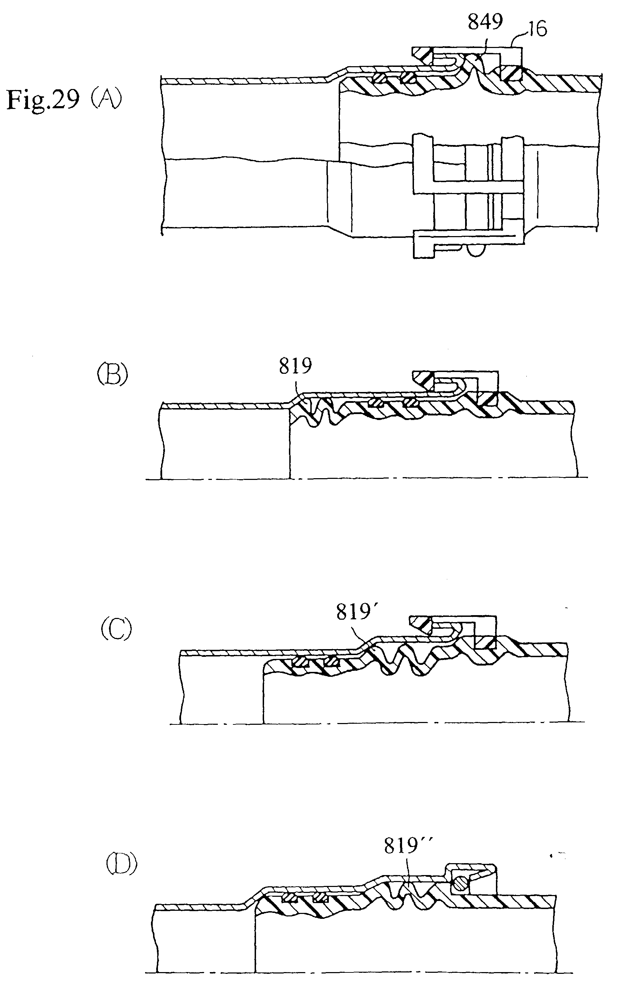

Figures 28 (A) and (B) are drawings for showing further modifications of the hose connecting structure of the Seventh Embodiment. Figure 28 (A) is a cross sectional view for showing the connecting condition. Figure 28 (B) is a perspective view for showing the edge portion of the hose. Figure 28 (C) is a main enlarged cross sectional view.

Figures 29 (A) to (D) are drawings for showing the hose connecting structure of the Eighth Embodiment and the modification. Figure 29 (A) is a main plan view, partly in cross section, for showing the hose connecting structure of the Eighth Embodiment. Figure 29 (B) is a main cross sectional view for showing the hose connecting structure of the modification. Figure 29 (C) is a main cross sectional view for showing the hose connecting structure of the other modification. Figure 29 (D) is a main cross sectional view for showing the hose connecting structure of a further modification.

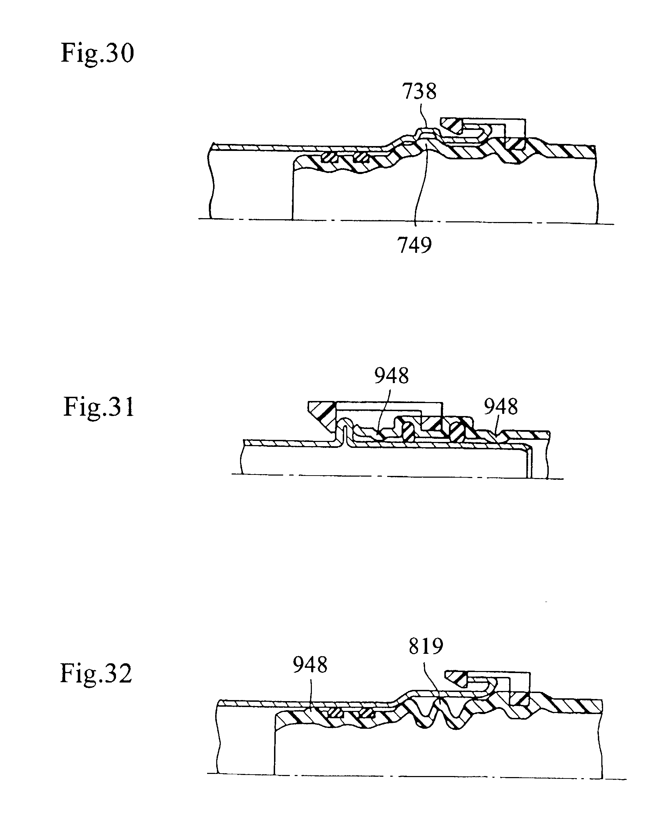

Figure 30 is a cross sectional view for showing the hose connecting structure of a further modification of the Eighth Embodiment.

Figure 31 is a main cross sectional view for showing the hose connecting structure of the modification of the Ninth Embodiment.

Figure 32 is a main cross sectional view for showing the hose connecting structure of the other modification of the Ninth Embodiment.

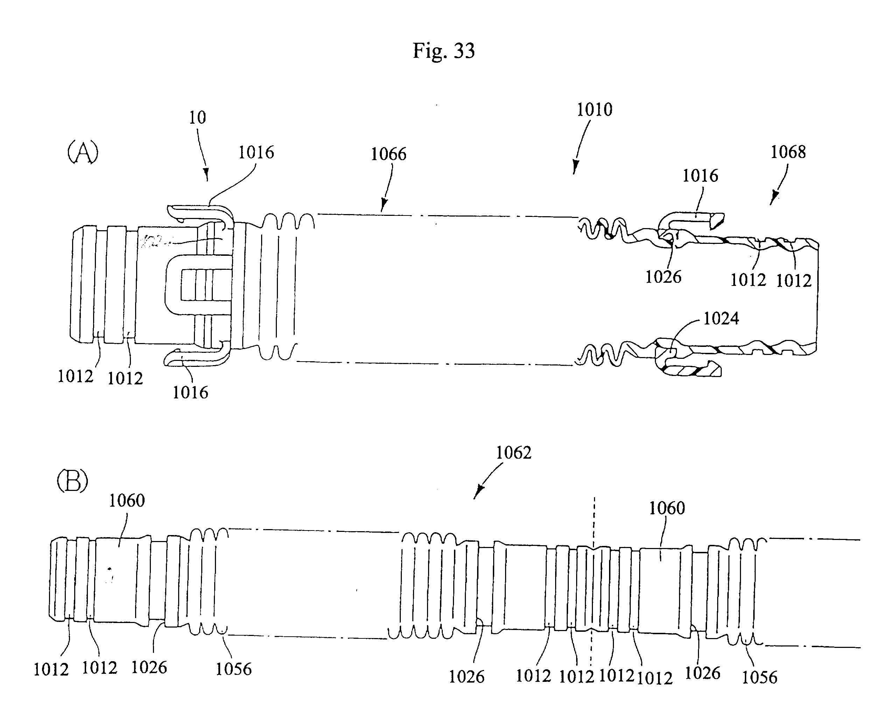

Figures 33 (A) and (B) are drawings for showing the resin hose which is formed by the method for forming the hose of the Tenth Embodiment. Figure 33 (A) is a plan view, partly in cross section, for showing the resin hose. Figure 33 (B) is a plan view for showing the body portion of the hose which is used for the method for forming the hose.

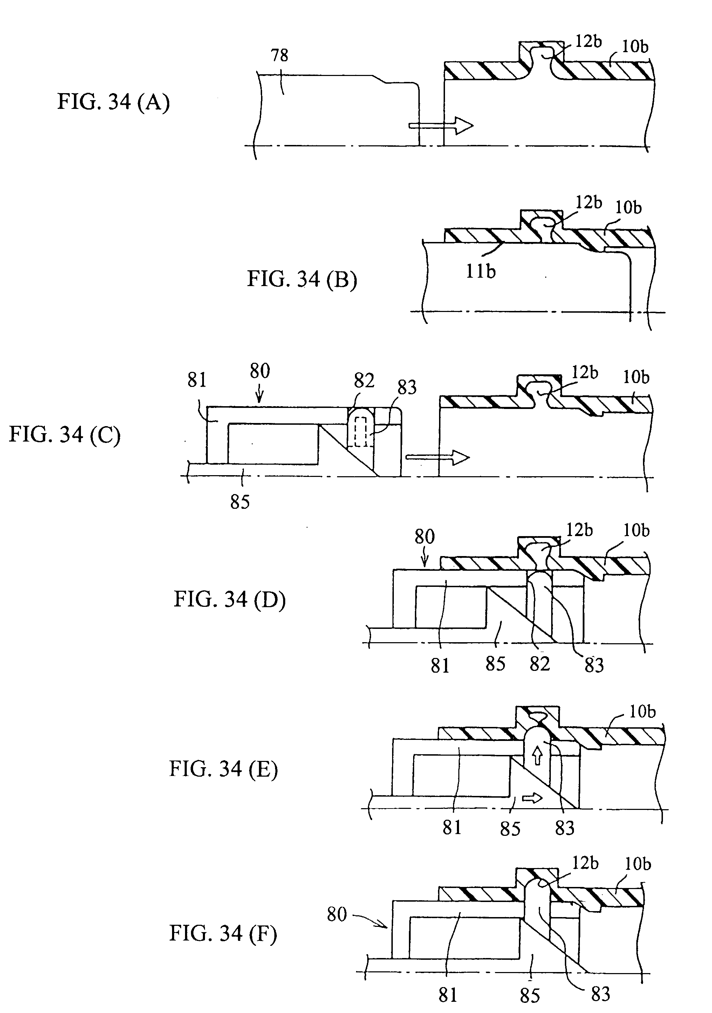

Figures 34 (A) to (F) show the remolding method of the inner periphery surface of the end portion of the hose of the Eleventh Embodiment. Figure 34 (A) shows the condition before the mandrel for molding the inner periphery surface is inserted. Figure 34 (B) shows the condition that the inner periphery surface is molded. Figure 34 (C) shows the condition of the resin hose and the molding apparatus before the sealing groove is processed. Figure 34 (D) shows the condition that the molding apparatus is inserted into the resin hose at the predetermined position. Figure 34 (E) shows the condition that the sealing groove is processed. Figure 34 (F) shows the condition that the sealing groove is processed.

Having generally described the present invention, a further understanding can be obtained by reference to the specific preferred embodiments which are provided herein for purposes of illustration only and are not intended to limit the scope of the appended claims.

The preferred Embodiments according to the present invention will be hereinafter described with reference to Figures 1 through 34.

### The First Embodiment

Figure 2 is the plan view showing whole of the hose 10. This hose 10 comprises body portion of the hose, which is made by a blow molding method and which has a predetermined curved shape, and a plurality of the first engaging portions 16 which are integrally fixed to the body portion of the hose. The intermediate portion of the hose 10 has a bellows portion which comprises a soft resin material. The rest of the portion comprises a hard resin material.

Each of the first engaging portions 16 comprises: a base 18 which is integrally welded and fixed on the outer peripheral portion of the body portion of the hose; a pair of rising portions 19 and 19 which rise up from the both ends of this base 18; a pair of elastic arms 20 and 20 which are parallelly extended from the upper edge of the rising portions 19; and an engaging claw 22 which is disposed for connecting the tips of elastic arms 20 and 20. A plurality of these first engaging portion 16 form the ring which makes a round by being connected by ring connecting portions 24 with one another in the circumferential direction.

The base 18 and the connecting portion 24 are incorporated into the inner side of a ring groove 26 which is formed on the hose 10 and it is integrated by welding with the groove 26. So, the surface of the connecting portion 24 is on a level with the outer surface of the hose 10.

The cross-sectional structure of the hose 10 can be a single layer structure or a lamination structure.

As shown in Figure 1, two O-ring grooves 12 and 12 are formed on a tip portion periphery surface 11 of the hose 10, and two O-rings 14 and 14 are attached to the O-ring grooves 12 and 12 respectively for sealing the hose 10. When the O-ring 14 is used for a filler hose, it is better to comprise the materials such as NBR or FKM. The O-ring 14 can comprise other materials.

A pipe-shaped mating member 28 comprises a metal material for connecting with the hose 10. The mating member 28 has a large-diameter portion 30 at the edge side, and the inner surface of the large-diameter portion 30 is an engaging surface 32. The large-diameter portion 30 is tapered at the bottom portion, and this tapered portion is a stopper portion 34. The stopper portion 34 contacts with the hose 10 to control an excess push.

The large-diameter portion 30 is curved and returned at the edge portion, and this curved return portion is a second engaging portion 36 for engaging with the first engaging portion 16.

In the hose connecting structure according to the present invention, when the end portion of the hose 10 is inserted into the inner portion of the mating member 28, the first engaging portion 16 comes to be elastically engaged with the second engaging member 36 to prevent the hose 10 from falling out. The stopper portion 34 connects with the edge portion of the hose 10 to control an excess push.

Figure 1(B) shows the enlarged cross-sectional view showing the major portion in the connecting state of the hose and the mating member.

The excess push can be controlled by contacting the edge portion of the mating member 28 and the rising portion 19 of the first engaging portion 16.

When the end portion of the hose 10 is inserted into the inner portion of the mating member 28, the outer surface 11 of the end portion is engaged with the inner surface 32 of the mating member 28 through the O-ring 14 which is used for obtaining the seal at the engaging portion.

Since the body portion of the hose 10 is made by blow molding method, the outer surface 11 has a high dimensional accuracy. In the present invention, it is advantageously possible to use the outer surface 11 as the engaging surface when the hose 10 is inserted into the inner portion of the mating member 28.

Figure 3 shows the method for producing the hose 10, concretely, the method for producing the first engaging portion 16. In Figure 3, 38 is a core die, and 40 is the body die. The body die 40 comprises two split dies 42 and 44 to form a molding cavity 46.

In this method, as shown in Figure 3(A), a resin material is injected into the molding cavity 46 under the condition that the body portion of the hose 10a is set in the molding die. The resin material is solidified to integrally form the first engaging portion 16 and the hose 10. The base 18 and the connecting portion 24 of the first engaging portion 16 are deposited to the inner surface of the groove 26 of the body portion of the hose 10a by means of the heat caused by the injection molding. As the result, the base portion 18 and the connecting portion 24 are stably fixed to the groove 26.

If the deposition is not enough, the base portion 18 and the connecting portion 24 are physically engaged with the inner surface of the groove 26, so that they are firmly fixed to the groove 26.

After the first engaging portion 16 is molded, as shown in Figure 3(B), the split dies 42 and 44 are separated in the direction of the hose axis to obtain the products. The split die 44 is rotated at the predetermined angle around the hose. Then after the molding portion 48 of the engaging claw 22 in the first engaging portion 16 is positioned between the engaging portions 16 and 16, the split die 44 is shifted in the direction of axis so as to go through the space between the first engaging portions 16 and 16. As the result, the split die 44 can be pulled out from the hose 10.

In this embodiment, the split dies 42 and 44 are shifted to the direction of the hose axis and are separated so as to pull out the hose. By means of providing two or four engaging claws 22 of the first engaging portions 16, the split die 42 and 44 can be separated by shifting them in the direction which is perpendicular to the axis. The connecting portion 24 is fully incorporated into the inner side of the groove 26 of the hose 10, so this connecting portion 24 doesn't prevent the split die 44 from extracting.

In the above-mentioned Embodiment, the body portion of the hose 10a is molded at first and it is set in the injection molding die. And in this state, the first engaging portion 16 is injection molded. Figures 4(A) and 4(B) shows another method of molding. As shown in Figures 4(A) and 4(B), the first engaging portion 16 is injection molded in advance and it is set in a blow molding die, then the body portion of the hose 10a may be blow molded. In this case, the base and the connecting portion 24 of the first engaging portion 16 can be formed so as to enter into the inside of the body portion of the hose 10a.

O-ring groove can also be molded at the body portion 10a at the same time of the blow molding by providing the projection 54 at the insert die (support die) in the blow molding die 52.

Furthermore as shown in Figures 5(A) and 5(B), the projection 54 is provided at the body die of the blow molding and the O-ring groove can be molded by this projection 54.

The above-mentioned first engaging portion 16 and the second engaging portion 36 show only examples of this invention. So they can be realized in various forms as shown in Figure 6.

For example, as shown in Figure 6(A), a thick-walled portion is provided at the edge portion and the second engaging portion 56 can be formed there. Further, as shown in Figure 6(B), a part, which is apart from the edge of the mating member 28 at the predetermined distance, projects radially outside, so that the second engaging portion 58 can be formed.

As shown in Figure 6(C), a part of the mating member 28 projects radially outside and is crushed in the axial direction so that the second engaging portion 62 can be provided. Also as shown in Figures 6(D) and (E), separate members 66 and 72 are fixed to the bodies 64 and 70 of the mating member 28 and the second engaging portion 68 and 74 can be provided at the separate member 66 and 72 respectively.

Also as shown in Figure 6(F), a separate member 78 is fixed to a body 76 and the second engaging portion 80 can be formed at the side of the body 76.

Figures 7 and 8 show other modifications.

In Figure 7(G), a ring groove is formed at the mating member 28 and this forms the second engaging portion 84. In Figure 7(H), an elastic ring, whose diameter can be enlarged and reduced, is attached to the groove 88 of the first engaging portion 86 and this forms an engaging claw 90.

In Figure 7(I), a claw member 91 is attached to the first engaging portion 89 and an elastic claw 92 is formed by cutting up the part of this claw member 91. In Figure 7(I), an elastic claw 96 is formed by cutting up the part of the arm of the first engaging portion 94.

In Figure 7(K), a separate member 100 is fixed by screwing to the body 98 of the mating member 28 and an arm 106 is fixed by screwing to the base 104 of the first engaging portion 102.

Furthermore, in Figure 8(L), thin-walled portion 110 is provided at the side of the mating member 28 in order to form an engaging surface 112 and a stopper portion 114. In Figure 8(M), the grooves 120 and 122 are formed at the mating member 28 and the first engaging portion 118 respectively and elastic rings whose diameter can be enlarged and reduced are engaged there.

In Figure 8(N), the first engaging portion 119 is formed so that a retainer 126 comprising a ring connecting portion 128, an arm 130 and an elastic claw 132 integrally is detachably hold to the lip portion 119b of the tube portion 119a.

Figures 8(O), (P) and (Q) show the constitutional modifications of the portion connecting the body portion of the hose 10a and the first engaging portion. Figure 8(0) shows the modification in which the body portion of the hose 10a is partly uplifted so as to form the groove 136 and engage the base 18 of the first engaging portion 16 at this groove.

As shown in Figures 4 and 5, Figure 8(P) shows the modification in which the base portion 50, provided with the projection projecting to the axial direction of the hose, is incorporated into the body portion of the hose 10a. Furthermore, Figure 8(Q) shows the modification in which the projection 140 is formed at the body portion of the hose 10a, the groove 142 is formed at the first engaging portion 16 and this projection and this groove are engaged with each other.

The above mentioned examples are modifications in which the engaging claw is provided at the side of the first engaging portion.

One of the preferred Embodiments of this invention has been detailed so far, but this invention is not limited thereto and may be realized in other forms. For instance, as shown in Figures 9(A) and 9(B) of this invention, the hose may be a blow hose 10' in which the whole of the body portion of the hose may be bellows portion 13. And this invention is applicable to this blow hose and other various forms of hoses.

### The Second Embodiment

Another preferred embodiment of this invention is shown in Figures 10 and 11.

The hose connecting structure of this embodiment comprises: a hose 210 formed by blow molding; a pipe-shaped mating member 228 comprising metal; an O-ring 214 and an elastic lock ring 216 comprising metal. The mating member 228 is provided with a larger-diameter portion 228a having a large inside diameter in its opening side and a ring engaging groove 236 is provided there. The base portion in the axial direction of the large diameter portion 236 is formed in a taper shape and that portion functions as a stopper portion 218 which prevents the hose 210 from inserting excessively into the mating member 228.

The hose 210 is a resin hose having a predetermined curved form and this hose is used as the air hose for an automobile (refer to Figure 2). The body portion and the end portion of the hose 210 are integrally molded through the same molding process in which the resin material is blow molded.

This hose 210 has a bellows portion 213 at the intermediate portion of its body portion. This bellows portion is mainly comprises a soft resin material and the rest of the portion is mainly comprises a hard resin material. The cross-sectional structure of the hose 210 can be a single layer structure or a lamination layer structure having a plurality of layers.

As shown in Figures 10(A), 10(B) and 10(C), on an end portion periphery surface 211 of the hose 210, two O-ring grooves 212 and 212 are formed and two O-rings 214 and 214 are attached to the O-rings grooves 212 and 212 respectively. The end portion periphery surface 211 of the hose 210 engages with the inner surface 232 of the mating member 228 through these O-rings 214. When the O-ring 214 is used for a filler hose, it is better to comprise materials such as NBR and FKM which are superior in oil resistance and gasoline resistance. O-ring 214 can comprise other materials.

At the surface of the hose 210, a ring-shaped and two projection portions 290 and 290 which project to the longitudinal outside direction are integrally molded in the vicinity of O-rings 214 and 214. Between these projections 290 and 290, an engaging groove 291 which corresponds to the engaging groove 236 of said mating member 228 is formed. An elastic lock ring 216 comprising metal is installed so as to be extending over the engaging grooves 236 and 291. And through this lock ring 216, a pair of engaging grooves 236 and 291 are engaged with each other in the axial direction. Namely the hose 210 is prevented from falling out owing to the lock effect by the lock ring 216.

In this embodiment, the lock ring 216 is engaged with the engaging groove 291 of the hose 210 in advance, and in this state, the end portion of the hose is inserted into the mating member 228. Due to this insertion, the lock ring 216 can be installed in the position which extends over the engaging grooves 236 and 291, based on the elastic deformation of the lock ring 216.

One of (the right side one in Figure 10(A)) these projections 290 and 290 of the hose 210 are provided with a notch 290a as shown in Figure 10(B). Through this notch 290a, operation handles 216a and 216a provided in the lock ring 216 project to the longitudinal outside direction namely the outside of the engaging groove 291.

The tips of the operation handles 216a and 216a are provided at almost the same position of the tip of the mating member 228. The whole operation handles 216a and 216a are provided in the position hidden inside of the mating member 228.

The lock ring 216 has the shape extending over the engaging groove 236 of the mating member 228 and the engaging grooves 291 of the hose 210 in the free condition. In this condition, this lock ring 216 can be elastically deformed in the direction of reduced diameter. In the state of a reduced diameter, the lock ring 216 gets out of the engaging groove 236 and has the reduced peripheral diameter. This state is shown in Figure 12 (B). The engagement of the engaging grooves 236 and 291 can be released by the following conditions: As shown in Figure 12, by pinching the operation handles 216a through the notch 290a and adding the force in the direction in which the operation handles 216a come close together, the lock ring 216 is deformed so as to have the reduced diameter, the lock ring 216 can be released from the engaging groove 236. Accordingly the engagement of the engaging grooves 236 and 291 can be released. By transferring the hose 210 relatively in the right direction in Figure 12(A) in this state, the hose 210 can be pulled out from the mating member 228.

Conversely when connecting the hose 210 with the mating member 228, it is only necessary to stuff the hose 210 into the inside of the mating member in the state in which the lock ring 216 is installed in the engaging groove 291. When the end portion of the hose 210 is pushed into the inside of the mating member 228, the diameter of lock ring 216 is once reduced by the effect of the taper-shaped guide surface 229 of the tip of the mating member 228. The end portion of the hose 210 is inserted into the inside of the mating member 228 in this state. Then when the end portion of the hose 210 reached to the engaging groove 236, the end portion of the hose 210 is expanded by its elasticity in the free condition and the part of it gets into the inside of the engaging groove 236. In this state, the engaging groove 236 and 291 are engaged each other in the axial direction through the lock ring 216 and the hose 210 is prevented from falling out.

In the hose connecting structure of this embodiment, the lock ring is provided in the position hidden inside of the mating member 228, and the notch 290a and the operation handle 216a projected from the notch 290a are similarly hidden inside of the mating member 228. Accordingly, the engagement of the mating member 228 and the hose 210 is not released owing to the external force by accident.

In the hose connecting structure of this embodiment, the end portion of the hose 210 is engaged with the mating member 228 through the O-ring 214. Accordingly, the sealing is secured without the elastic contacting, so even though the end portion of the hose 210 comprises a hard resin material, sufficient sealing can be obtained. And the selecting of materials of the hose 210 and its end portion can be conducted more freely.

In the hose connecting structure of this embodiment, the end portion of the hose which are used directly to the connecting and the body portion of hose are molded through the same blow molding process. And at the same time, O-ring grooves 212 and 212, a pair of projections 290 and 290 of the hose 210 and the engaging groove 291 between them are formed under the same blow molding process. So it is advantageous in reducing the production cost.

Instead of using the hose 210 of this Embodiment, a hose 210' shown in Figures 13(A) and 13(B) can be employed. A bellows portion 213 of this hose 210' extends over the whole intermediate portion of the hose. Figure 13(A) shows the sectional view of the hose 210' to which the lock ring is attached. Figure 13(B) shows the plan view of the hose 210'.

### The Third Embodiment

Another Embodiment of this invention will be hereinafter described with reference to Figures 14 and 15.

In this embodiment, as shown in Figure 14(A), the mating member 328 comprises a metallic pipe. At the tip of the mating member 328, a ring-shaped increasing diameter end portion 330 which is formed by increasing the diameter. And at the same time, the tip of this projection 330 is bent to the inside and an engaging groove 336 is formed there. This engaging groove 336 functions to engage with an engaging groove 391 of the hose 310 through the lock ring 316.

As shown in Figures 14(B) and 14(C), around the projection 390 of the hose 310, four notches 390a are formed in four spots respectively. By these notches 390a, the handling of enlarging the diameter can be conducted.

Figure 15(A) shows the tool 346 for enlarging the diameter of the lock ring 316. As shown in Figure 15(A), this tool comprises the ring-shaped portioned 347 comprising two parts which can be divided in the direction which is perpendicular to the axis, four claws 348 which extend from this ring-shaped portion 347 and four taper-shaped guide surfaces 350 at the tips of these claws 348 respectively.

In this embodiment, the engaging between the engaging grooves 391 and 336 is released as follows: As shown in Figure 15(B), the tool 346 is installed at the outer surface of the hose 310 and the claws 348 are positioned at the place corresponding to the notches 390a. In the above-mentioned situation, if the tool is pushed into the axial direction (the left direction shown by the arrow in Figure 15(B), the lock ring 316 is extended by the effect of the guide surfaces 350 of the tips of the claws 348, as shown in Figure 15(C). The lock ring 316 is released from the engaging groove 391. Accordingly, the engagement of the engaging grooves 391 and 336 is released. In this way, the hose 310 can fall out from the mating member 328 by relatively shifting the hose 310 in the right direction.

When connecting the hose 310 to the mating member, it is only necessary to insert the hose 310 in the left direction shown in Figure 15(B). At first, the lock ring 316 is secured in the inside of the engaging groove 336 of the mating member 228. Then the hose 310 is inserted in the left direction shown in Figure 15(B), and the lock ring 316 is once extended by the effect of taper-shaped guide surface 352 of the projection 390 which is at the front side of the hose 310. So the lock ring 316 has its diameter reduced in the free condition by the effect of its elasticity at the same time as the passage of the projection 390 at the front side. The engaging grooves 336 and 391 are engaged. Accordingly, the lock ring 316 gets into the action condition.

Next, Figure 16 shows some other modifications of the above-mentioned lock ring.

Figure 16(A) shows the modification in which the operation handle 354 of the lock ring is in the shape having the curved return portion 356 curved to the radially outside. Figure 16(B) shows the modification in which the operation handle 358 of the lock ring is in the shape having the curved rising portion 360 which is exposed on the outer peripheral surface of the mating member 328.

Figure 16(C) shows the modification in which the lock ring 362 has a rectangular shape in its cross section and the inner peripheral surface of the lock ring 362 has tapered surface 364 whose diameter is gradually enlarged toward the opening end of the mating member 328.

The above-mentioned lock rings are secured to the engaging groove of the mating member 328 prior to the insertion of the tip portion of the hose 310.

Figure 17 shows some modifications of the mating member 328. In Figure 17(A), the edge portion member 374 as the separate member is fixed to the body 372 of the mating member 328, comprising resin, by screwing. So the engaging groove 376 is composed of the body 372 and the tip portion member 374. In Figure 17(B), a part of the body portion 380 of the mating member 328 comprising resin projects to the outside from the through hole. So the body portion 380 and the edge portion member 382 are mutually fixed and the engaging groove 384 is composed of these body portion 380 and the edge portion member 382.

### The Fourth Embodiment

The hose connecting structure in the Fourth Embodiment of this invention will be hereinafter described with reference to Figure 18. The hose connecting structure of this Embodiment comprises a hose 410, a mating member 428 and two O-rings 414 and 414 and a lock ring 416.

The hose 410 is a blow molded hose having a predetermined curved shape which is formed by blow molding the whole of the hose. This hose 410 has a bellows portion 413 at the intermediate portion thereof. This bellows portion mainly comprises a soft resin material and the rest of the portion mainly comprises a hard resin material. The cross-sectional structure of the hose 410 can be a single layer structure or a lamination layer structure having a plurality of layers.

On an end portion periphery surface 411 of the hose 410, two O-ring grooves 412 and 412 are formed and two O-rings 414 and 414 are attached to the O-rings grooves 412 and 412 respectively. The end portion periphery surface 411 of the hose 410 engages with the inner surface 432 of the mating member 428 through these O-rings 414 and 414. When the O-ring 414 is used for a filler hose, it is better to comprise materials such as NBR and FKM which are superior in oil resistance and gasoline resistance. O-ring 414 can comprise other materials.

The hose 410 is provided with a flange portion 480 formed at the region which is near to the rear side of the O-rings 412 and 412, and this flange portion 480 is formed by a part of the hose 410 projecting radially outside.

The edge side surface of this flange 480 comprises a tapered guide surface 481 whose diameter is gradually enlarged toward the end side of the hose 410. This guide surface 481 also functions as the stopper surface which controls an excess push.

The first engaging groove 491 is formed at the outer surface of the portion which is at the end side compared with the position of the O-ring grooves 414 and 414.

The mating member 428 comprises metal and has a pipe shape. The mating member comprises two parts, namely, a body 428a and the edge portion member 428b. This edge portion member 428b is fixed to the body 428a by screwing. These body 428a and the edge portion member 428b form the second engaging groove 436 which corresponds to the first engaging groove 491 at the hose 410.

The second engaging groove 436 and the first engaging groove 491 are together in the axial direction through the lock ring 416 which can be elastically deformed in the radial direction. So the hose 410 is prevented from falling out from the mating member 428. This state is shown in Figure 19(A).

The edge portion member 428b is used as the sealing surface whose inner surface is in contact with the O-rings 414 and 414. At the edge portion (in Figure 19, the right edge portion) of the edge portion member 428b, a tapered guide surface 429, which corresponds to the guide surface 481 of the hose, is formed.

This guide surface 429 also functions to control an excess push of the hose 410 together with the guide surface 481 of the hose's flange portion 480.

In the hose connecting structure of this embodiment, as shown in Figure 18, the lock ring 416 which is separated from the hose is attached to the first engaging groove 491 of the hose at first. In this state, the end portion of the hose 410 is pushed into the inside of the mating member 428. The diameter of the lock ring 416 is once reduced by the effect of the guide surface 429 of the tip of the mating member 428. So the end portion of the hose 410 together with the hose 410 is inserted into the inside of the mating member 428. Then when the end portion of the hose 410 has reached the second engaging groove 436, the end portion of the hose 410 is subjected to expanding deformation by its elasticity and the part of it gets into the inside of the second engaging groove 436. Namely, the first engaging groove 491 at the side of the hose 410 and the second engaging groove 436 at the side of the mating member 428 are engaged in the axial direction through the lock ring 416. Accordingly, the hose 410 is prevented from falling out.

It may be also possible to conduct the insertion and connection of the hose 410 by holding the lock ring 416 by the second engaging groove 436 of the mating member 428.

In the hose connecting structure of this embodiment, when the end portion of the hose 410 is pushed into the inside of the mating member 428, O-rings 414 and 414 don't pass through the second engaging groove 436. Accordingly, O-rings 414 and 414 are not damaged by the contact of the O-rings 414 and 414 and the second engaging groove 436 or by the connection of them. So the sealing capacity is not damaged by the hurt of the O-rings 414 and 414.

The opening of the second engaging groove 436 can be provided at the same radial position as the position of the sealing surface which is in contact with the O-rings 414 and 414. Accordingly, the structure and the shape of the second engaging groove 436 and the periphery of it can be formed simply.

For example as shown in Figure 14, the first engaging groove 391 at the side of the hose 310 is provided at the rear side compared with the O-rings 314 and 314, and the second engaging groove 336 of the side of the mating member 328 is provided at the corresponding position of the first engaging groove 391. In this case, when the end portion of the hose 310 is pushed, O-rings 314 and 314 pass through the second engaging groove 336, so the opening of the second engaging groove 336 must be placed at the position running off radially outside.

The present embodiment doesn't cause the above-mentioned nonconformity.

When the hose 410 needs to be pulled out from the mating member 428, the edge portion member 428b is removed as the separate member from the body portion 428a of the mating member 428 and the hose 410 can be pulled out from the body portion 428a.

In the hose connecting structure of this embodiment, there is no disadvantage that the hose 410 falls out from the mating member 428 owing to the external force by an accident.

This embodiment has another advantage that it is easy to treat the sealing surface at the side of the mating member 428 which is in contact with the O-rings 414 and 414. In this embodiment, the inner surface of the edge portion member 428b forms the sealing surface. Accordingly, it is possible to treat the sealing surface in the state in which the edge portion member 428b is separated from the body portion 428a.

In the hose connecting structure of this embodiment, the end portion of the hose 410 is engaged with the mating member 428 through the O-rings 414 and 414. Accordingly, the sealing is secured without the elastic contacting of the hose 410 and the mating member 428, so even though the end portion of the hose 410 comprises a hard resin material, sufficient sealing can be obtained. And the selecting of materials of the hose 410 and its end portion can be conducted more freely.

In the hose connecting structure of this embodiment, the end portion of the hose, O-ring grooves 414 and 414, the flange portion 480, the first engaging groove 491 are formed by blow molding. So they are formed at the same as the body portion of the hose 410 is formed by the same blow molding. Accordingly it is advantageous in reducing the production cost.

Next, Figures 19(B),(C) and (D) show other modifications of the hose 410 and the mating member 428 in this embodiment.

In Figure 19(B), a stepped portion 434 is provided at the mating member 428 and this stepped portion 434 functions as the stopper portion 434 to control an excess push of the hose 410. The flange portion 480 shown in Figure 19(A) is not provided at the hose 410 of Fig. 19(B).

In Figure 19(C), the edge portion member 428b which is screwed in the body 428a' of the mating member 428 projects radially inside, and this forms the engaging groove 436' as the second engaging portion. Figure 19(C) shows the example in which the edge surface of the engaging projection 436' is engaged with the first engaging groove 491 at the side of the hose 410 through the lock ring 416.

Furthermore, Figure 19(D) shows the modification in which the part of the inner surface of the mating member 428 projects radially outside in the ring shape and the second engaging groove 437 is formed at the inner surface side of this projection. The edge portion of the mating member 428 is expanded to have enlarged diameter in the tapered shape, and the guide surface 429' which also functions as stopper surface is formed there.

In hose connecting structure of the Fourth Embodiment, it is essential that the engaging member is positioned at edge side compared with the portion at which the sealing member is held. So it is preferable to use the blow-molded hose whose outer surface having high dimensional accuracy is used as the engaging surface. In these embodiment, it is also possible to insert the inner surface of the hose into the outer surface of the mating member so as to connect them.

### The Fifth Embodiment

Figure 20 shows the representative modification showing the connecting structure of the resin hose, of this invention, which is provided with the function of preventing free play in radial direction. The connecting structure shown in Figure 20 is the improvement of the structure shown in Figure 1(A). Only the improved parts will be hereinafter described. The rest of the parts are the same structure as that of the First Embodiment. As shown in Figure 20(B), four projections 548 are provided in this embodiment. These projections 548 are provided at regular intervals around the outer peripheral surface of the hose 10 which is positioned between the first engaging portion 16 of the hose 10 and O-rings 14 and 14. The diameter passing through the apices of these projections is larger than the inner diameter of the inner peripheral surface of the mating member 28 which is engaged with these projections. Accordingly, in the state in which the tip of the hose 10 is inserted into and engaged to the opening of the mating member 28, these projections 548 are pressed by the inner peripheral surface of the mating member 28 and elastically deformed. Owing to this elastic deformation, the hose 10 and the mating member 28 are engaged without having a free play in the direction which is perpendicular to the axis.

The above-mentioned projections 548 which prevent free play in the direction which is perpendicular to the axis are not limited to apply to the connecting structure of the resin hose shown in Figure 1. For instance, these projections may be applied to the connecting structure of the resin hose shown in Figure 14(A). Figure 21(A) and 21(B) show the above-mentioned modification. In this modification, four projections 548' are provided at the outer peripheral surface of the hose 310.

Figure 22(A) and 22(B) show another modification in which the projections 548'' are provided to another connecting structure. In this modification, the peripheral surface of the resin hose is the engaging surface. In blow molding, the inner peripheral surface of the blow molded hose is not subjected to die forming on the surface of the forming die. Accordingly, dimensional accuracy is low in blow molding. But owing to these projections 548'', the free play between the hose and the mating member in the direction vertical to the axial direction is prevented from being generated. Furthermore, the sealing capacity is obtained by adopting the Y-shaped seal ring 552. Figure 22(C) shows the modification in which the positions of forming projections 548'' are shifted.

In Figure 23, the projections 548''' are formed at the mating member. Owing to these projections 548''', the engaging surface of the resin hose is pressed, elastically deformed and constantly connected with the mating member. Accordingly the free play is prevented from being generated.

### The Sixth Embodiment

Figure 24(A) shows another embodiment which prevents the free play at the engaging portion in the direction which is perpendicular to the axis.

The elastic deformation of the first engaging portion 616 is utilized this modification. When no force is affected on the first engaging portion 616, the claw portion at the tip thereof is inclined to the shaft center direction. So the first engaging portion 616 is engaged with the second engaging portion 636 and diameter of the first engaging portion is elastically enlarged. This elastic deformation prevents backlash in the direction which is perpendicular to the axis from being generated.

Figure 24(B) shows still another modification. In this modification, the elastic deformation of the first engaging portion 16 and the second engaging portion 36 formed by metallic pipe is utilized. The cross section of the second engaging portion 36 is bent so as to be formed in the U shape. The second engaging portion 36 is compressed in the direction which is perpendicular to the axis by the surface of the shaft center side of the first engaging portion 16 and the outer peripheral surface of the resin hose. This prevents the free play at the connecting portion from being generated.

### The Seventh Embodiment

Figure 25 shows the embodiment in which the backlash at the engaging portion in the axial direction is prevented from being generated. Both in Figures 25(A) and 25(B), a bellows portion 719 is formed at the tip portion of the resin hose. This bellows portion is compressed and elastically deformed in the axial direction. In Figures 25(A) and 25(B), the bellows portion 719 is pressed in the axial direction and the tensile stress as its reaction force is acted to the first engaging portion 16 in the axial direction.

Figure 26 shows another modification. In this modification, a ring projection 747 which projects to the inner peripheral surface side of the resin hose is provided. The elastic deformation of this projection 747 is utilized. When the mating member is engaged, the tip of the mating member comes in contact with the inclined surface at the tip side of the projection 747, and presses it in the axial direction. This causes the elastic deformation of the projection 747 and at the same time the portion of the resin hose, which is positioned between the projection 747 and the base of the first engaging portion 16, is elastically extended. The tensile stress is acted on the first engaging portion in the axial direction. The engaging portion of the mating member is compressed in the axial direction. This prevents the backlash in the axial direction from being generated.

Figure 27 shows still another modification. In this modification, the tip of the resin hose is pressed in the axial direction to the taper-shaped slope of the second engaging portion 36 of the mating member. Accordingly, the tip portion of the resin hose is elastically compressed and deformed in the axial direction. The tensile stress in the axial direction is acted on the first engaging portion 16. The second engaging portion of the mating member is compressed from both sides in the axial direction.

Figure 28 shows still another modification. The irregularity in engaging is utilized in this modification. As shown in Figures 28(A) and 28(B), on the engaging surface of the resin hose, a relatively wide projection 749 which encircles the inner peripheral surface thereof is formed. At the engaging portion of the mating member, a groove 738, whose cross section is rectangle and into which the top of the projection 749 enters, is formed. In the state in which the projection 749 and the groove 738 are engaged, as shown in Figure 28(C) showing the enlarged main part, the slopes on both sides of the top of the projection 749 are in contact with the both edge surfaces of the groove 738 whose cross section is rectangled. Also these slopes are pressed in the axial direction. Accordingly this prevents the backlash in the axial direction from being generated.

### The Eighth Embodiment

Figure 29 shows the embodiment in which the outer peripheral surface of the resin hose is the engaging surface and in which the backlash at the engaging portion in the axial direction is prevented from being generated. Figure 29(A) shows the modification in which the ring projection 849, provided on the outer peripheral surface, is utilized. This projection 849 is pressed by the tip portion of the mating member and is deformed by compressing in the axial direction. The tensile stress is acted on the first engaging portion 16 in the axial direction. Accordingly the backlash in the axial direction is prevented from being generated. In this case, ring projection 849 is compressed in the vertical direction against the axial direction, so a free play in the direction vertical to the axial direction is prevented.

Figure 29(B) shows the modification in which a bellows portion 819, which is provided on the tip portion of the resin hose, is utilized. The bellows portion 819 is compressed between the enlarged-diameter portion of the mating member and the base of the first engaging portion 16 and it is elastically deformed by compressing. The tensile stress is acted on the first engaging portion 16 and on the engaging portion of the mating member.

Figure 29(C) also shows the modification in which the bellows portion 819' is utilized. The position in which the bellows portion 819' is formed is different from that shown in Figure 29(B) but the bellows portion 819' has the same function as that shown in Figure 29(B). Figure 29(D) also shows the bellows portion 819'' whose position is different from that shown in Figure 29(B) but whose function is the same as that shown in Figure 29(B).
The compressive force is acted on the engaging portion of the mating member.

Figure 30 shows the modification in which the same principle as that in the modification shown in Figure 28 is utilized. In Figure 30, the engaging surface of the resin hose is the outer peripheral surface, so the projection 749 is outwardly in the shape of convex.

### The Ninth Embodiment

Next, the modifications in which a plurality of mechanisms for preventing free play are provided in the axial direction will be hereinafter explained.

In Figure 31, two mechanisms for preventing free play in the direction which is perpendicular to the axis are provided at the internal in the axial direction. There is provided a projection 948 in the ring shape. This projection 948 is deformed by compressing and prevents the free play at this portion from being generated.

In this modification, two pairs of projections 948 are provided at the interval in the axial direction.

Figure 32 shows another modification in which the projection for preventing the free play in the direction which is perpendicular to the axis and a bellows portion 819 for preventing the backlash in the axial direction are provided.

### The Tenth Embodiment

A method of producing the resin hose of this invention will be hereinafter described.

Figure 33(A) is the cross-sectional view omitting a part of a resin hose 1010 which is produced by the method of this embodiment.

In this embodiment, a long compact 1062 which is shown in Figure 33(B) is used as the connecting edge portions 1068 and 1068 excluding the body portion 1066 and elastic engaging claws 1016. This compact 1062 is formed to have the bellows portions 1056 and straight-shaped portions 1060 including O-ring grooves 1012 and the ring grooves 58 lined by turns. This hose 1010 is produced by the following processes: the long compact 1062 is cut at the straight-shaped portion 1060 and fixed at a metal mold; elastic claws 1016 and ring connecting portion which connect these claws are formed by injection molding so that the rein material gets into the inside of ring grooves 1026.

In this embodiment, the main part of the connecting edge portion 1068 is formed in advance when the long compact 1062 is formed. Only the rest of the elastic engaging claws 1016 and a connecting portion 1024 are formed by injection molding and comprise the connecting edge portion 1068.

The preferred Embodiments of this invention have been detailed so far, but this invention is not limited thereto and may be realized in other forms. The bellows portion and the straight-shaped portion may comprise different kinds of resin material. For instance, the bellows portion may comprise a soft resin material and the straight-shaped portion may comprise a hard resin material. Also the cross-sectional structure of each of these portions may be various types of lamination layer structures.

Furthermore, in the above embodiments and their modification, all long compacts are cut and comprise the produced hose using as their lengths are. In some cases, the long compact may be cut each of its repeated units, these units are connected in the axial direction and may comprise the hose.

### The Eleventh Embodiment

The Eleventh Embodiment discloses the method for remolding the inner periphery surface of the resin hose in which the inner periphery surface of the edge portion of the hose is used as the engaging surface. Figure 34 (A) shows the condition before the heating mandrel 78 for the remolding is inserted into the edge opening of the resin hose 10b. As shown in Figure 34 (B), the heating mandrel 78 is inserted to dissolve the inner periphery surface of the edge portion of the resin hose 10b. After that, the inner periphery surface is cooled and has the excellent dimensional accuracy.

Figures 34 (C) to (F) show the process for remolding the sealing groove 12b after the inner periphery surface is remolded. Figure 34 (C) shows the resin hose 10b and a molding apparatus 80 before the sealing groove is molded. The molding apparatus comprises an outer tube 81 having the same outer diameter as that of the inner periphery surface 11b of the remolded resin hose, a hole 82 which penetrates in the vertical direction against the axial direction of the outer tube, a pair of head portions 83 and 83 for molding which is inserted and hold, and a driving shaft portion 85 in which the tip portion for projecting the head portion 83 in the centrifugal direction is projected in the shape of arrow and in which the trailed slope surface is used as a cam surface. A heater 84 for heating is disposed inside the tip portion of the head portion 83, and the pair of head portions 83 and 83 are compressed by a tensile spring (not shown) to be close to each other. As shown in Figure 34 (D), the molding apparatus 80 is inserted in the axial hole of the resin hose 10b to match the position of the sealing groove 12b and the hole 82. The head portion 83 is heated by the heater 84 to rotate the molding apparatus 80 coaxially to the resin hose 10b. The driving shaft portion 85 is actuated in the axial direction, and the pair of head portions 83 and 83 are projected from the hole 82 to form the sealing groove 12b. This condition is shown in Figure 34 (E). After that, the head portion 83 is projected to the predetermined position to reform the sealing groove 12b. This condition is shown in Figure 34 (F). The head portion 83 is again inserted into the hole 82, and the molding apparatus 80 is drawn out from the resin hose 10b, thereby finishing the molding.

## Claims

1. A hose connecting structure comprising
a hose (10; 10a; 10b; 210; 310; 410), an end portion thereof having an opening and an intermediate portion thereof being integrally formed by thermoplastic resin by blow molding;
a mating member (28; 228; 328; 428) which is connected to said end portion of said hose by insertion;
an engaging surface (11; 11b; 211; 311; 411) which lies either at an outer periphery or an inner periphery of said end portion of said hose and which is engagable with said mating member;
a ring-shaped sealing groove (12; 212; 312; 412) encircling said engaging surface, which groove has been at least pre-formed simultaneously with said engaging surface by said blow molding method,
a ring-shaped sealing member (14; 214; 314; 414) being disposed between said mating member and said end portion of said hose and held in said groove,
a first engaging portion (16; 86; 89; 94; 102; 118; 119; 216; 316; 362; 416; 616; 617; 1016) which is disposed at the end portion of said hose at a predetermined distance from said opening and which has been formed separately from said blow molded end portion; and
a second engaging portion (36; 56; 58; 62; 68; 74; 80; 84; 236; 336; 376; 384; 436; 436'; 437; 637) which is disposed at the mating member and which is engaged with said first engaging portion.

2. A hose connecting structure according to claim 1,
**characterized in that**
said end portion of said hose (10; 10a; 10'; 210; 310; 410) is inserted and engaged with the opening of said mating member (28; 228; 328; 428).

3. A hose connecting structure according to claim 1 or 2,
**characterized in that**
said end portion of said hose has a free play prevention portion for preventing free play in a radial direction comprising projection portions (548; 548'; 548''; 849; 819; 819'; 819''; 749; 948) which are elastically deformed by an engaging surface (32; 232; 432) of said mating member and which are projected from the engaging surface of said hose.

4. A hose connecting structure according to claim 3,
**characterized in that**
two pairs of said free play prevention portions (819; 948) are disposed spaced a predetermined distance apart in the axial direction.

5. A hose connecting structure according to claim 3,
**characterized in that**
said projection portion is a protrusion (548; 548'; 548''; 849; 819; 819'; 819''; 749; 948) in the radial direction.

6. A hose connecting structure according to claim 3,
**characterized in that**
said first engaging portion comprises a projecting lug (16; 616) which is extended in the axial direction and which has the function of preventing free play in the radial direction.

7. A hose connecting structure according to any of claims 1 to 6,
**characterized in that**
said engaging surface at said end portion of said hose is a ring-shaped contacting surface which is disposed spaced a predetermined distance apart in the axial direction to said first engaging portion and which is contacted to said mating member in the axial direction, and a backlash prevention portion (719; 746; 819'; 819'') for preventing backlash in an axial direction is disposed between said first engaging portion and said ring-shaped contacting surface and which is elastically compressed by the pressure in the axial direction.

8. A hose connecting structure according to claim 7,
**characterized in that**
said backlash prevention portion is a projection lug (746) or a groove which encircles at least one round in the circumferential direction.

9. A hose connecting structure according to claim 7,
**characterized in that**
said backlash prevention portion is a bellows portion (719; 819'; 819").

10. A hose connecting structure according to any of claims 7 to 9,
**characterized in that**
said free play prevention portion comprises at least three projection portions which are arranged in the circumferential direction.

11. A hose connecting structure according to claim 1,
**characterized in that**
said engaging surface is an inner periphery surface of said end portion of said hose (10b) and a ring-shaped sealing groove (12b) encircles said inner periphery surface (11b) for holding said sealing member.

12. A hose connecting structure according to claim 11,
**characterized in that**
said inner periphery surface (11b) of said end portion of said hose (10b) is reformed.

13. A hose connecting structure according to claim 11 or 12,
**characterized in that**
said sealing groove (12b) is reformed.

14. A hose connecting structure according to any of the preceding claims,
**characterized in that**
said first engaging portion comprises an engaging arm comprising an arm portion (19, 20; 106; 130; 616; 1016) which projects from said outer periphery in the radial direction toward said end side, and an engaging claw (22; 90; 91, 92; 96; 132) which is disposed at the end of said arm portion, and said second engaging portion comprises a ring-shaped engaging surface (36; 56; 62; 68; 74; 80; 100) which encircles the outer periphery surface of an opening edge portion of said mating member in the circumferential direction and which is directed away from said opening edge portion.

15. A hose connecting structure according to claim 14,
**characterized in that**
a plurality of engaging arms are disposed at said outer periphery surface in the circumferential direction.

16. A hose connecting structure according to claim 14 or 15,
**characterized in that**
said mating member comprises a metal pipe (28), said second engaging portion comprises a projection wall (36) which is the end of said metal pipe shaped into a radial flange and an increased diameter portion (30) which extends in the axial direction from the circumference end of said projection wall to the side opposite to said end and whose shape is in a small tube, and an edge surface of said increased diameter portion is contacted to and engaged with said engaging claw.

17. A hose connecting structure according to claim 1,
**characterized in that**
said engaging surface of said hose is a ring-shaped first contacting surface at said outer periphery, and said mating member has a ring-shaped second contacting surface which is contacted to said first contacting surface at an inner peripheral surface of an opening edge portion of said mating member.

18. A hose connecting structure according to any of claims 2 to 13,
**characterized in that**
said sealing groove (214; 314; 414) is disposed towards the end of the outer periphery, said first engaging portion comprises a lock ring (216; 316; 362; 416) disposed in a first engaging groove (291; 391; 491) which is disposed away from the end in the axial direction with a predetermined distance to said sealing groove, said second engaging portion comprises a second engaging groove (236; 336; 376; 384; 436; 436'; 437) which is disposed at an inner periphery surface of an opening edge portion of said mating member, and said lock ring engages said first engaging groove with said second engaging groove.

19. A hose connecting structure according to claim 18,
**characterized in that**
said first engaging portion is disposed towards the end of the outer periphery, and said sealing groove is disposed away from the end in the axial direction with a predetermined distance to said first engaging portion.

20. A hose connecting structure according to claim 18 or 19,
**characterized in that**
said second engaging groove is disposed at the end portion of said mating member, and a tapered guide surface whose inner periphery diameter is increased is disposed at an opening side at which an opening is elastically deformed in the shaft center direction by bending the edge portion of the opening inwardly..

21. A hose connecting structure according to any of claims 18, 19 or 20,
**characterized in that**
said lock ring (216; 316; 362; 416) is elastically deformable in the direction which is perpendicular to the axis.

22. A hose connecting structure according to claim 21,
**characterized in that**
said first engaging groove (290; 390) comprises a recess (290a; 390a) which partly opens said first engaging groove in the axial direction, and said lock ring (216; 316) is held to said first engaging groove and comprises a C-shaped engaging portion which is elastically deformable in the direction which is perpendicular to the axis of said hose (210; 310) and an operation edge (216a; 356; 360) which integrally projects in said recess from both ends of said first engaging portion.

23. A hose connecting structure according to claim 21,
**characterized in that**
a plurality of recesses (390a) are disposed spaced a predetermined distance apart in the circumferential direction and each recess (390a) partly opens said first engaging groove (390) in the axial direction, and said lock ring (316; 362) is held to said first engaging groove (390) and is a C-shape which is elastically deformable in the direction which is perpendicular to the axis.

24. A hose connecting structure according to claim 21,
**characterized in that**
said mating member (328) comprises a metal pipe, said second engaging portion (336) comprises a projection wall (330) which is the end of said metal pipe shaped into a radial flange and an increased diameter portion which extends in the axial direction from the circumference end of said projection wall (330) and whose shape is in a small tube and a ring-shaped engaging plate which extends with an inclination from the end of said increased diameter portion to the opposite side of an opening in the shaft center direction, and a groove (336) is formed between said projection wall (330) and said engaging plate.

25. A method for forming a hose according to claim 12 comprising:
a step of remolding said inner periphery surface (11b) by heating.

26. A method for forming a hose according to claim 13, comprising:
a step of remolding said sealing groove (12b) by heating.

## Patentansprüche

1. Schlauchverbindung mit
einem Schlauch (10; 10a; 10b; 210; 310; 410), von dem ein Endabschnitt eine Öffnung aufweist und ein Zwischenabschnitt durch Blasformen aus thermoplastischem Harz einstückig ausgebildet ist;
einem Paßelement (28; 228; 328; 428), das durch Einsetzen mit dem Endabschnitt des Schlauches verbunden ist;
einer Eingriffsfläche (11; 11b; 211; 311; 411), die entweder am Außenumfang oder am Innenumfang des Endabschnittes des Schlauches liegt und mit dem Paßelement in Eingriff bringbar ist;
einer ringförmigen Dichtungsnut (12; 212; 312; 412), die die Eingriffsfläche umgibt und mindestens gleichzeitig mit der Eingriffsfläche durch das Blasformverfahren vorgeformt worden ist;
einem ringförmigen Dichtungselement (14; 214; 314; 414), das zwischen dem Paßelement und dem Endabschnitt des Schlauches angeordnet ist und in der Nut gehalten wird;
einem ersten Eingriffsabschnitt (16; 86; 89; 94; 102; 118; 119; 216; 316; 362; 416; 616; 617; 1016), der am Endabschnitt des Schlauches in einem vorgegebenen Abstand von der Öffnung angeordnet und getrennt vom blasgeformten Endabschnitt geformt worden ist; und
einem zweiten Eingriffsabschnitt (36; 56; 58; 62; 68; 74; 80; 84; 236; 336; 376; 384; 436; 436'; 437; 637), der am Paßelement angeordnet ist und mit dem ersten Eingriffsabschnitt in Eingriff steht.

2. Schlauchverbindung nach Anspruch 1, dadurch gekennzeichnet, daß der Endabschnitt des Schlauches (10; 10a; 10'; 210; 310; 410) in die Öffnung des Paßelementes (28; 228; 328; 428) eingesetzt ist und mit dieser in Eingriff steht.

3. Schlauchverbindung nach Anspruch 1 oder 2, dadurch gekennzeichnet, daß der Endabschnitt des Schlauches einen Abschnitt zum Verhindern von freiem Spiel in Radialrichtung besitzt, der vorstehende Abschnitte (548; 548'; 548''; 849; 819; 819', 819''; 749; 948) umfaßt, die von einer Eingriffsfläche (32; 232; 432) des Paßelementes elastisch verformt sind und von der Eingriffsfläche des Schlauches vorstehen.

4. Schlauchverbindung nach Anspruch 3, dadurch gekennzeichnet, daß zwei Paare der Abschnitte (819; 948) zur Verhinderung von freiem Spiel in einem vorgegebenen Abstand in Axialrichtung angeordnet sind.

5. Schlauchverbindung nach Anspruch 3, dadurch gekennzeichnet, daß der vorstehende Abschnitt ein Vorsprung (548; 548'; 548''; 849; 819; 819'; 819''; 749; 948) in Radialrichtung ist.

6. Schlauchverbindung nach Anspruch 3, dadurch gekennzeichnet, daß der erste Eingriffsabschnitt eine vorstehende Nase (16; 616) umfaßt, die sich in Axialrichtung erstreckt und die Funktion der Verhinderung von freiem Spiel in Radialrichtung besitzt.

7. Schlauchverbindung nach einem der Ansprüche 1 bis 6, dadurch gekennzeichnet, daß die Eingriffsfläche am Endabschnitt des Schlauches eine ringförmige Kontaktfläche ist, die in einem vorgegebenen Abstand in Axialrichtung vom ersten Eingriffsabschnitt angeordnet ist und mit dem Paßelement in Axialrichtung in Kontakt steht, und daß ein Abschnitt (719; 746; 819'; 819") zum Verhindern von Spiel in Axialrichtung zwischen dem ersten Eingriffsabschnitt und der ringförmigen Kontaktfläche angeordnet ist, der durch den in Axialrichtung ausgeübten Druck elastisch zusammengepreßt wird.

8. Schlauchverbindung nach Anspruch 7, dadurch gekennzeichnet, daß der Abschnitt zur Verhinderung von Spiel eine vorstehende Nase (746) oder eine Nut ist, die sich in Umfangsrichtung mindestens einmal herum erstreckt.

9. Schlauchverbindung nach Anspruch 7, dadurch gekennzeichnet, daß der Abschnitt zur Verhinderung von Spiel ein Balgabschnitt (719; 819'; 819") ist.

10. Schlauchverbindung nach einem der Ansprüche 7 bis 9, dadurch gekennzeichnet, daß der Abschnitt zur Verhinderung von freiem Spiel mindestens drei vorstehende Abschnitte umfaßt, die in Umfangsrichtung angeordnet sind.

11. Schlauchverbindung nach Anspruch 1, dadurch gekennzeichnet, daß die Eingriffsfläche eine innere Umfangsfläche des Endabschnittes des Schlauches (10b) ist und daß eine ringförmige Dichtungsnut (12b) die innere Umfangsfläche (11b) zum Halten des Dichtungselementes umgibt.

12. Schlauchverbindung nach Anspruch 11, dadurch gekennzeichnet, daß die innere Umfangsfläche (11b) des Endabschnittes des Schlauches (10b) umgeformt ist.

13. Schlauchverbindung nach Anspruch 11 oder 12, dadurch gekennzeichnet, daß die Dichtungsnut (12b) umgeformt ist.

14. Schlauchverbindung nach einem der vorangehenden Ansprüche, dadurch gekennzeichnet, daß der erste Eingriffsabschnitt einen Eingriffsarm mit einem Armabschnitt (19, 20; 106; 130; 616; 1016) umfaßt, der vom Außenumfang in Radialrichtung zu einer Endseite vorsteht, sowie eine Eingriffsklaue (22; 90; 91, 92; 96; 132), die am Endabschnitt des Armabschnittes angeordnet ist, und daß der zweite Eingriffsabschnitt eine ringförmige Eingriffsfläche (36; 56; 62; 68; 74; 80; 100) umfaßt, die die äußere Umfangsfläche eines Öffnungsrandabschnittes des Paßelementes in Umfangsrichtung umgibt und vom Öffnungsrandabschnitt weggerichtet ist.

15. Schlauchverbindung nach Anspruch 14, dadurch gekennzeichnet, daß eine Vielzahl von Eingriffsarmen an der äußeren Umfangsfläche in Umfangsrichtung angeordnet ist.

16. Schlauchverbindung nach Anspruch 14 oder 15, dadurch gekennzeichnet, daß das Paßelement ein Metallrohr (28) umfaßt, daß der zweite Eingriffsabschnitt eine vorstehende Wand (36) umfaßt, die das Ende des Metallrohres bildet, das zu einem radialen Flansch und einem Abschnitt (30) mit erhöhtem Durchmesser geformt ist, welcher sich in Axialrichtung vom Umfangsende der vorstehenden Wand zu der Seite erstreckt, die dem Ende gegenüberliegt, und dessen Form die eines kleinen Rohres ist, und daß eine Randfläche des Abschnittes mit erhöhtem Durchmesser mit der Eingriffsklaue in Kontakt und in Eingriff steht.

17. Schlauchverbindung nach Anspruch 1, dadurch gekennzeichnet, daß die Eingriffsfläche des Schlauches eine ringförmige erste Kontaktfläche am Außenumfang ist und daß das Paßelement eine ringförmige zweite Kontaktfläche besitzt, die mit der ersten Kontaktfläche an einer inneren Umfangsfläche eines Öffnungsrandabschnittes des Paßelementes in Kontakt steht.

18. Schlauchverbindung nach einem der Ansprüche 2 bis 13, dadurch gekennzeichnet, daß die Dichtungsnut (214; 314; 414) zum Ende des Außenumfangs hin angeordnet ist, daß der erste Eingriffsabschnitt einen Verriegelungsring (216; 316; 362; 416) umfaßt, der in einer ersten Eingriffsnut (291; 391; 491) angeordnet ist, die vom Ende in Axialrichtung weg mit einem vorgegebenen Abstand zur Dichtungsnut angeordnet ist, daß der zweite Eingriffsabschnitt eine zweite Eingriffsnut (236; 336; 376; 384; 436; 436'; 437) umfaßt, die an einer inneren Umfangsfläche eines Öffnungsrandabschnittes des Paßelementes angeordnet ist, und daß der Verriegelungsring die erste Eingriffsnut mit der zweiten Eingriffsnut in Eingriff bringt.

19. Schlauchverbindung nach Anspruch 18, dadurch gekennzeichnet, daß der erste Eingriffsabschnitt zum Ende des Außenumfangs hin angeordnet ist und daß die Dichtungsnut vom Ende in Axialrichtung weg mit einem vorgegebenen Abstand zum ersten Eingriffsabschnitt angeordnet ist.

20. Schlauchverbindung nach Anspruch 18 oder 19, dadurch gekennzeichnet, daß die zweite Eingriffsnut am Endabschnitt des Paßelementes angeordnet ist und daß eine sich verjüngende Führungsfläche, deren Innenumfangsdurchmesser erhöht ist, an einer Öffnungsseite angeordnet ist, an der eine Öffnung in Schaftmittenrichtung durch Verbiegen des Randabschnittes der Öffnung nach innen elastisch verformt ist.

21. Schlauchverbindung nach einem der Ansprüche 18, 19 oder 20, dadurch gekennzeichnet, daß der Verriegelungsring (216; 316; 362; 416) in der Richtung senkrecht zur Achse elastisch verformbar ist.

22. Schlauchverbindung nach Anspruch 21, dadurch gekennzeichnet, daß die erste Eingriffsnut (290; 390) eine Ausnehmung (290a; 390a) umfaßt, die die erste Eingriffsnut in Axialrichtung teilweise öffnet, und daß der Verriegelungsring (216; 316) an der ersten Eingriffsnut gehalten ist und einen C-förmigen Eingriffsabschnitt umfaßt, der in der Richtung senkrecht zur Achse des Schlauches (210; 310) elastisch verformbar ist, sowie einen Betätigungsrand (216a; 356; 360), der von beiden Enden des ersten Eingriffsabschnittes einstückig in die Ausnehmung vorsteht.

23. Schlauchverbindung nach Anspruch 21, dadurch gekennzeichnet, daß eine Vielzahl von Ausnehmungen (390a) mit vorgegebenem Abstand in Umfangsrichtung angeordnet ist und daß jede Ausnehmung (390a) die erste Eingriffsnut (390) in Axialrichtung teilweise öffnet und daß der Verriegelungsring (316; 362) an der ersten Eingriffsnut (390) gehalten ist und C-Form besitzt, die in der Richtung senkrecht zur Achse elastisch verformbar ist.

24. Schlauchverbindung nach Anspruch 21, dadurch gekennzeichnet, daß das Paßelement (328) ein Metallrohr umfaßt, daß der zweite Eingriffsabschnitt (336) eine vorstehende Wand (330) umfaßt, die das Ende des Metallrohres bildet, das zu einem radialen Flansch und zu einem Abschnitt mit erhöhtem Durchmesser geformt ist, der sich vom Umfangsende der vorstehenden Wand (330) in Axialrichtung erstreckt und dessen Form die eines kleinen Rohres und einer ringförmigen Eingriffsplatte ist, die sich mit einer Neigung vom Ende des Abschnittes mit erhöhtem Durchmesser bis zur gegenüberliegenden Seite einer Öffnung in Schaftmittenrichtung erstreckt, und daß eine Nut (336) zwischen der vorstehenden Wand (330) und der Eingriffsplatte ausgebildet ist.

25. Verfahren zur Ausbildung eines Schlauches gemäß Anspruch 12 mit dem Schritt des Umformens der inneren Umfangsfläche (11b) durch Erhitzen.

26. Verfahren zur Ausbildung eines Schlauches nach Anspruch 13 mit dem Schritt des Umformens der Dichtungsnut (12b) durch Erhitzen.

## Revendications

1. Raccord à tuyau souple avec
un tuyau souple (10; 10a; 10b; 210; 310; 410) avec une portion terminale comprenant une ouverture et une portion intermédiaire, formé d'une pièce par soufflage sur matrice, à partir d'une résine thermoplastique;
un élément adaptateur (28; 228; 328; 428) qui est raccordé par insertion avec la portion terminale du tuyau souple;
une surface d'engagement (11; 11b; 211; 311; 411) qui se situe sur la périphérie interne ou sur la périphérie interne de la portion terminale du tuyau souple et qui peut s'engager avec l'élément adaptateur;
une rainure annulaire (12; 212; 312; 412) pour garniture fait le tour de la surface d'engagement et elle est réalisée au moins en même temps que la surface d'engagement, lors du soufflage sur matrice;
un élément de garniture annulaire (14; 214; 314; 414) qui est disposé entre l'élément adaptateur et la portion terminale du tuyau souple, en venant se loger dans la rainure;
une première portion d'engagement (16; 86; 89; 94; 102; 118; 119; 216; 316; 362; 416; 616; 617; 1016) formée sur la portion terminale du tuyau souple à une distance prédéterminée de l'ouverture et formée séparément de la portion terminale par soufflage sur matrice; et une seconde portion terminale d'engagement (36; 56; 58; 62; 68; 74; 80; 84; 236; 336; 376; 384; 436; 436'; 437; 637), formée sur l'élément adaptateur et s'engageant avec la première portion d'engagement.

2. Raccord à tuyau souple selon la revendication 1, caractérisé en ce que la portion terminale du tuyau souple (10; 10a; 10'; 210; 310; 410) est installée dans l'ouverture de l'élément adaptateur (28; 228; 328; 428) et engagée avec elle.

3. Raccord à tuyau souple selon la revendication 1 ou la revendication 2, caractérisé en ce que la portion terminale du tuyau souple comporte une portion pour empêcher tout jeu dans la direction radiale, comprenant des portions saillantes (548; 548'; 548"; 849; 819; 819', 819"; 749; 948) qui sont formées élastiquement sur une surface d'engagement (32; 232; 432) de l'élément adaptateur et qui font saillie de la surface d'engagement du tuyau souple.

4. Raccord à tuyau souple selon la revendication 3, caractérisé en ce que deux paires de portions (819; 848) sont disposées à une distance prédéterminée dans la direction axiale pour empêcher tout jeu.

5. Raccord à tuyau souple selon la revendication 3, caractérisé en ce que la portion saillante est une saillie (548; 548'; 548"; 849; 819; 819'; 819"; 749; 948) dans la direction radiale.

6. Raccord à tuyau souple selon la revendication 3, caractérisé en ce que la première portion d'engagement comprend un nez saillant (16; 616) qui s'étend dans la direction axiale et qui a pour rôle d'empêcher tout jeu dans la direction radiale.

7. Raccord à tuyau souple selon l'une des revendications 1 à 6, caractérisé en ce que la surface d'engagement sur la portion terminale du tuyau souple est une surface de contact annulaire, qui se trouve à une distance prédéterminée dans la direction axiale de la première portion d'engagement et qui est en contact dans la direction axiale avec l'élément adaptateur et en ce qu'une portion (719; 746; 819'; 819") pour empêcher un jeu dans la direction axiale est prévue entre la première portion d'engagement et la surface de contact annulaire et elle est comprimée par la pression élastique produite axialement.

8. Raccord à tuyau souple selon la revendication 7, caractérisé en ce que la portion pour empêcher le jeu est constituée par un nez (746) ou par une rainure qui s'étend au moins une fois autour de la circonférence.

9. Raccord à tuyau souple selon la revendication 7, caractérisé en ce que la portion pour empêcher le jeu est une portion en bourrelet (719; 819'; 819").

10. Raccord à tuyau souple selon l'une des revendications 7 à 9, caractérisé en ce que la portion pour empêcher un jeu comprend au moins trois portions saillantes, qui sont disposées suivant la direction circonférentielle.

11. Raccord à tuyau souple selon la revendication 1, caractérisé en ce que la surface d'engagement comprend une surface interne de portion terminale du tuyau souple (10b) et en ce qu'une rainure annulaire (12b) pour garniture fait le tour de la surface d'engagement interne (11b) pour recevoir l'élément de garniture.

12. Raccord à tuyau souple selon la revendication 11, caractérisé en ce que la surface circonférentielle interne (11b) de la portion terminale du tuyau souple (10) est déformée.

13. Raccord à tuyau souple selon la revendication 11 ou la revendication 12, caractérisé en ce que la rainure (12b) pour garniture est obtenue par déformation.

14. Raccord à tuyau souple selon l'une des revendications précédentes, caractérisé en ce que la première portion d'engagement comprend un bras d'engagement avec une portion de bras (19, 20; 106;130; 616; 1016) qui fait saillie de la circonférence externe dans la direction radiale vers un côté terminal, ainsi qu'une griffe d'engagement (22; 90; 91, 92; 96; 132) qui se trouve disposée sur la portion terminale de la portion de bras et en ce que la seconde porti.on d'engagement comprend une surface d'engagement annulaire (36; 56; 62; 68; 74; 80; 100) qui entoure la surface circonférentielle externe d'une portion de bord de l'ouverture de l'élément adaptateur dans la direction circonfèrentielle et qui est orientée dans la direction opposée à la portion de bord de l'ouverture.

15. Raccord à tuyau souple selon la revendication 14, caractérisé en ce que l'on prévoit une pluralité de bras l'engagement sur la surface circonférentielle externe, disposés suivant la direction circonférentielle.

16. Raccord à tuyau souple selon la revendication 14 ou la revendication 15, caractérisé en ce que l'élément adaptateur comprend un tube métallique (28), en ce que la seconde portion d'engagement comprend une paroi saillante (36) qui constitue l'extrémité du tube métallique et qui est formée pour constituer une bride radiale et une portion (30) avec un diamètre augmenté, s'étendant dans la direction axiale depuis l'extrémité circonférentielle de la paroi saillante vers le côté qui est opposé à l'extrémité et dont la forme est celle d'un petit tube et en ce qu'une surface de bord de la portion avec le diamètre agrandi est en contact et engagée avec la griffe d'engagement.

17. Raccord à tuyau souple selon la revendication 1, caractérisé en ce que la surface d'engagement du tuyau souple comprend une première surface de contact annulaire sur la circonférence externe et en ce que l'élément adaptateur comprend une seconde surface de contact annulaire, qui vient en contact avec la première surface de contact, sur la surface circonférentielle interne d'une portion de bord d'ouverture de l'élément adaptateur.

18. Raccord à tuyau souple selon l'une des revendications 2 à 13, caractérisé en ce que la rainure (214; 314; 414) pour garniture se trouve à l'extrémité de la surface circonférentielle externe, que la première portion d'engagement comprend un anneau de verrouillage (216; 316; 362; 416) venant dans une première rainure d'engagement (291; 391' ; 491) qui se trouve à une distance axiale prédéterminée de la rainure pour garniture dans la direction opposée à l'extrémité, en ce que la seconde portion d'engagement comprend une seconde rainure d'engagement (236; 336; 376; 384; 436; 436'; 437), qui se trouve sur une surface circonférentielle interne d'une portion de bord d'ouverture de l'élément adaptateur et en ce que l'anneau de verrouillage provoque l'engagement de la première rainure d'engagement avec la seconde rainure d'engagement.

19. Raccord à tuyau souple selon la revendication 18, caractérisé en ce que la première portion d'engagement se trouve à l'extrémité de la circonférence externe et en ce que la rainure pour garniture de l'extrémité se trouve à une distance axiale prédéterminée de la première portion d'engagement dans la direction opposée à l'extrémité.

20. Raccord à tuyau souple selon la revendication 18 ou la revendication 19, caractérisé en ce que la seconde rainure d'engagement se trouve sur la portion d'extrémité de l'élément adaptateur et en ce qu'une surface de guidage tronconique et dont le diamètre circonférentiel interne est augmenté, se trouve sur un côté d'ouverture, dans lequel une ouverture est formée élastiquement dans la direction centrale du corps, par pliage de la portion de bord de l'ouverture vers l'intérieur.

21. Raccord à tuyau souple selon la revendication 18, 19 ou 20, caractérisé en ce que l'anneau de verrouillage (216; 316; 362; 416) est déformable élastiquement dans la direction perpendiculaire à l'axe.

22. Raccord à tuyau souple selon la revendication 21, caractérisé en ce que la première rainure d'engagement (290; 390) comprend un creux (290a; 390a) qui ouvre partiellement la première rainure d'engagement dans la direction axiale et en ce que l'anneau de verrouillage (216; 316) est retenu dans la première rainure d'engagement et comprend un élément d'engagement en forme de C qui est déformable dans la direction perpendiculaire à l'axe du tuyau flexible (210; 310), ainsi qu'un bord d'actionnement (216a; 356; 360) qui fait saillie d'une pièce dans le creux depuis les deux extrémités de la première portion d'engagement.

23. Raccord à tuyau souple selon la revendication 21, caractérisé en ce que plusieurs creux (390a) sont prévus à une distance prédéterminée suivant la direction de la circonférence et en ce que chaque creux (390a) ouvre partiellement la première rainure d'engagement (390) suivant la direction axiale et en ce que l'anneau de verrouillage (316; 362) est retenu par la première rainure d'engagement (390) et comprend un élément en forme de C, qui est déformable élastiquement dans la direction perpendiculaire à l'axe.

24. Raccord à tuyau souple selon la revendication 21, caractérisé en ce que l'élément adaptateur (328) comprend un tube métallique, en ce que la seconde portion d'engagement (336) comprend une paroi saillante (330), constituant l'extrémité du tube métallique, qui comprend une bride radiale et une portion avec un diamètre agrandi s'étendant depuis l'extrémité circonférentielle de la paroi saillante (330) dans la direction axiale et ayant la forme d'un court tuyau avec une plaque d'engagement annulaire, qui s'étend en pente depuis l'extrémité de la portion avec le diamètre augmenté jusqu'au côté d'une ouverture dans la direction du centre du corps et en ce qu'une rainure (336) est prévue entre la paroi saillante (330) et la plaque d'engagement.

25. Procédé pour réaliser un raccord à tuyau souple selon la revendication 12, dans lequel la portion de déformation de la surface circonférentielle interne (11b) est formée par chauffage.

26. Procédé pour réaliser un raccord à tuyau souple selon la revendication 13, dans lequel la portion de la déformation de la rainure (12b) pour garniture est formée par chauffage.
